# EUROPEAN PATENT APPLICATION

(11) **EP 1 712 945 A2**
(43) Date of publication of application: **18.10.2006**
(21) Application number: 06007537.1
(22) Date of filing: 10.04.2006
(51) Int. Cl.: G02B 21/24, G02B 21/00, G02B 7/14, G02B 23/24

(54) **Microscope examination apparatus**

(30) Priority: 15.04.2005 JP 2005118546; 25.08.2005 JP 2005244078; 17.02.2006 JP 2006040909
(71) Applicant: Olympus Corporation, Tokyo 151-0072 (JP)
(72) Inventor: Karaki, Kenji, Ina-shi Nagano 396-0011 (JP); Nonoda, Yukio, Ina-shi Nagano 396-0111 (JP)
(74) Representative: von Hellfeld, Axel

(57) **Abstract**

With the invention, when an external force is applied to the tip of an objective lens in a direction intersecting the optical axis thereof, that external force is effectively relieved, thus maintaining the integrity of the objective lens and specimen. The invention provides a microscope examination apparatus including an apparatus main body, a base member secured to the apparatus main body, an objective-lens mounting member for mounting an objective lens unit, and a support mechanism for supporting the objective-lens mounting member in such a manner as to enable movement thereof in a direction intersecting the optical axis of the objective lens unit relative to the base member.

## Description

### BACKGROUND OF THE INVENTION

### 1. FIELD OF THE INVENTION

The present invention relates to a microscope examination apparatus.

This application is based on Japanese Patent Application No. 2005-118546, Japanese Patent Application No 2005-244078, and Japanese Patent Application No. 2006-040909, the content of which is incorporated herein by reference.

### 2. DESCRIPTION OF RELATED ART

Known microscope examination apparatuses in the related art include the structure disclosed, for example, in Japanese Unexamined Patent Application Publication No. HEI-11-167066.

This microscope examination apparatus includes an objective lens having a spring-based shock-absorbing mechanism. The spring-based shock-absorbing mechanism has a configuration in which the tip of an objective lens is moved parallel to the optical axis against an external force when the tip of the objective lens unit is pressed by such a force. By employing this spring-based shock absorbing mechanism, when a specimen is disposed on a slide glass and is covered by a cover glass and observed using an objective lens with a short working distance (WD), an advantage is afforded in that it is possible to prevent damage to the cover glass or the specimen, even if the tip of the objective lens accidentally contacts the cover glass.

Another known microscope examination apparatus in the related art is, for example, the structure disclosed in Japanese Unexamined Patent Application Publication No. HEI-5-72485.

This microscope examination apparatus includes a revolver for mounting a plurality of objective lenses with different magnifications so as to enable them to be exchanged. Examination with the microscope examination apparatus is normally carried out over a large area of the specimen using a low-magnification objective lens. After focusing using a focusing unit and aligning the area to be examined in detail with the center of the examination image, the revolver is operated to exchange the objective lens with a new one having a higher resolution.

When carrying out in-vivo examination of the interior of a living organism such as a laboratory animal like a mouse, it is necessary to insert the tip of the objective lens inside the living organism. In this case it is necessary to direct the optical axis of the objective lens orthogonal to the examination site inside the living organism, and it is preferable to set the orientation of the objective lens in various directions to allow examination of the interior of the living organism, such as a laboratory animal, from various angles.

However, when the objective lens is tilted relative to the specimen or a stage on which the specimen is mounted, an external force is often applied to the tip of the objective lens in the optical axis direction when the objective lens is moved in only the optical axis direction, thus causing the spring-based shock-absorbing mechanism described above to function. However, the spring-based shock-absorbing mechanism may not function if the objective lens is moved in a direction intersecting the optical axis, even though an external force acts on the tip of the objective lens. There is an additional problem in that, when the objective lens is moved only along the optical axis, if the objective lens is tilted relative to the stage on which the specimen is mounted, the spring-based shock-absorbing mechanism does not function well due to the tilt angle when the tip of the objective lens hits the stage.

These cases involve the following problems: an excessive external force acts on the objective lens, the objective lens or stage is damaged, and the specimen is damaged.

Furthermore, when carrying out examination with the tip of the objective lens inserted inside the living organism, when it is necessary to replace the objective lens with another one having a different magnification, it is necessary to extract the tip of the objective lens from inside the living organism. Therefore, after replacing it, the objective lens should be returned to the original position using the focusing unit, followed by continued examination.

In this case, when replacing the objective lens using the revolver, like the related art, each time the magnification changes, it is necessary to sufficiently retract the objective lens using the focusing unit to a position where the objective lens does not interfere with the specimen even when the revolver is rotated. If the focusing unit is motorized, the objective lens can be accurately returned to the position before changing the magnification; however, in order to move it in a short period of time, a strong driving motor is required, which increases the costs and makes it difficult to build into an apparatus requiring a small space. In addition, if the focusing unit is not motorized, there is a problem in that, although it can be moved quickly by hand, it is not possible to return it to the original position accurately.

### BRIEF SUMMARY OF THE INVENTION

The present invention has been conceived in light of the circumstances described above, and an object thereof is to provide a microscope examination apparatus that can maintain the integrity of the objective lens and specimen by effectively relieving an external force acting on the tip of the objective lens in a direction intersecting the optical axis thereof.

Another object of the present invention is to provide a microscope examination apparatus in which an objective lens unit can easily be attached and detached.

Another object of the present invention is to provide an optical apparatus in which costs can be reduced, the amount of space required can be reduced, and the magnification can be quickly changed.

In order to realize the objects described above, the present invention provides the following solutions.

The present invention provides a microscope examination apparatus comprising an apparatus main body; a base member secured to the apparatus main body; an objective-lens mounting member for mounting an objective lens unit; and a support mechanism for supporting the objective-lens mounting member in such a manner as to enable movement thereof relative to the base member in a direction intersecting an optical axis of the objective lens unit.

According to the present invention, when an external force in a direction intersecting the optical axis is applied to the objective lens unit, the external force is transmitted to the objective-lens mounting member to which the objective lens unit is mounted. Because the objective-lens mounting member is supported on the base member by the support mechanism, when the external force is applied to the objective-lens mounting member, as a result of this force, the objective-lens mounting member moves relative to the base member in the direction intersecting the optical axis of the objective lens unit. Thus, particularly when the objective lens unit moves at an angle, it is possible to prevent an excessive force from being applied to the tip of the objective lens unit, and it is therefore possible to prevent damage to the objective lens unit and the specimen.

In the configuration described above, preferably the support mechanism has a spherical surface provided on one of the base member and the objective-lens mounting member and an inner spherical surface provided on the other one of the base member and the objective-lens mounting member and having a shape that is complementary to the spherical surface; and the support mechanism includes an urging member for keeping the spherical surface and the inner spherical surface in contact.

With this configuration, due to the action of the urging member, it is possible to position the base member and the objective-lens mounting member such that the spherical surface and the inner spherical surface are in contact. Thus, it is possible to position the tip of the objective lens with high precision. Also, by displacing the inner spherical surface along the spherical surface, it is possible to displace the objective-lens mounting member in any direction relative to the base member. Therefore, it is possible to relieve an external force acting on the tip of the objective lens unit from any direction, and it is thus possible to protect the objective lens unit and the specimen.

In the configuration described above, preferably, a ball plunger is provided in one of the base member and the objective-lens mounting member, the ball plunger being formed of a guide hole extending in a radial direction from the spherical surface or the inner spherical surface, a ball which is accommodated in the guide hole so as to be capable of coming in and out, and a spring for urging the ball in a direction that causes the ball to protrude from an opening of the guide hole; and an indentation is provided in the other one of the base member and the objective-lens mounting member, the indentation engaging with the ball of the ball plunger when a center axis of the base member and a center axis of the objective-lens mounting member are aligned.

With this configuration, because the ball of the ball plunger is engaged with the indentation when the center axis of the base member is aligned with the center axis of the objective-lens mounting member, it is possible to keep the optical axis of the objective lens unit aligned with a high degree of precision. On the other hand, when an external force in a direction intersecting the optical axis acts on the tip of the objective lens unit, if the magnitude of that external force is a predetermined value or greater, the ball of the ball plunger and the indentation are disengaged, the objective-lens mounting member is displaced relative to the base member. Therefore, it is possible to prevent an excessive force from acting on the objective lens unit, and it is also possible to stably support the objective lens unit so that it does not shift merely by applying a small external force.

In the configuration described above, the support mechanism may have a cylindrical surface provided in the base member and an inner cylindrical surface provided in the objective-lens mounting member and having a shape that is complementary to the cylindrical surface, and the support mechanism may include an urging member for keeping the cylindrical surface and the inner cylindrical surface in contact.

With this configuration, it is possible to position the base member and the objective-lens mounting member so that the cylindrical surface and the inner cylindrical surface contact each other due to the action of the urging member. Thus, it is possible to position the tip of the objective lens with a high degree of precision. Also, by displacing the inner cylindrical surface in the circumferential direction of the cylindrical surface, it is possible to displace the objective-lens mounting member relative to the base member in one direction.

In the configuration described above, the cylindrical surface and the inner cylindrical surface have central axes that are parallel to a rotation shaft for changing the orientation of the apparatus main body.

When the orientation of the apparatus main body is changed by rotating it about the rotation shaft, an external force in a direction intersecting the optical axis is easily applied to the tip of the objective lens unit. With this configuration, however, because the objective-lens mounting member is shifted relative to the base member about a central axis that is parallel to the rotation axis for changing the orientation of the apparatus main body, the external force acting on the tip of the objective lens unit as a result of changing the orientation of the apparatus main body can be effectively relieved.

In the aspect of the invention described above, preferably, a ball plunger is provided, the ball plunger being formed of a guide hole extending in a radial direction from the cylindrical surface or the inner cylindrical surface, a ball which is accommodated in the guide hole so as to be capable of coming in and out, and a spring for urging the ball in a direction that causes the ball to protrude from an opening of the guide hole; and an indentation is provided for engaging with the ball of the plunger when a central axis of the base member and a central axis of the objective-lens mounting member are aligned.

With this configuration, because the ball of the ball plunger is engaged with the indentation when the center axis of the base member is aligned with the center axis of the objective-lens mounting member, it is possible to keep the optical axis of the objective lens unit aligned with a high degree of precision. On the other hand, when an external force in a direction intersecting the optical axis acts on the tip of the objective lens unit and if the magnitude of the external force is a predetermined value or greater, the ball of the ball plunger and the indentation are disengaged, and the objective-lens mounting member moves relative to the base member. Therefore, it is possible to prevent an excessive external force from acting on the objective lens unit, and it is possible to stably support the objective lens unit so that it is not displaced when a small external force acts.

In the configuration described above, the urging member is preferably formed of springs disposed at both sides in the movement direction of the objective-lens mounting member with respect to the base member so as to flank the optical axis of the objective lens unit.

With this configuration, by displacing the objective-lens mounting member relative to the base member, when the amount of displacement of the urging member disposed at one side with respect to the optical axis of the objective lens unit increases, the amount of displacement of the urging member disposed at the other side decreases. As a result, an unbalanced urging force is produced by the two urging members disposed on either side of the optical axis of the objective lens unit, and the objective lens unit is urged so that it returns towards a position where the center axis of the base member and the center axis of the objective-lens mounting member are aligned. Thus, after the external force is removed, the objective lens unit can be automatically returned to a position where the center axis of the base member and the center axis of the objective-lens mounting member are aligned.

In the configuration described above, the support mechanism may couple the base member and the objective-lens mounting member and may include a flexible member which bends when a predetermined external force or above is exerted on the objective-lens mounting member in a direction intersecting an optical axis of an objective lens.

With this configuration, when an external force of a predetermined value or greater acts, the flexible member flexes to relieve the external force, which ensures that an excessive force does not act on the objective lens.

The configuration described above may further include a sensor for detecting displacement between the base member and the objective-lens mounting member.

With this configuration, even if a displacement that cannot be visually observed occurs, it can be detected by the sensor. Therefore, it is possible to avoid carrying out examination while the objective lens unit is displaced, which can prevent any waste of time involved.

In the configuration described above, preferably, the support mechanism has an inner guard portion provided in one of the base member and the objective-lens mounting member so as to project inward in the radial direction and an outer guard portion provided in the other one of the base member and the objective-lens mounting member so as to project outward in the radial direction, and the support mechanism includes an urging member for axially urging the inner guard portion and the outer guard portion in directions that cause contact therebetween; and notches are provided in the inner guard portion and the outer guard portion for disengagement thereof in the axial direction when the inner guard portion and the outer guard portion are disposed at predetermined relative rotational angles about the optical axis.

With this configuration, when an external force in a direction intersecting the optical axis acts on the tip of the objective lens unit, the external force is transmitted to the objective-lens mounting member to which the objective-lens unit is mounted. Because the objective-lens mounting member is supported on the base member by the support mechanism, when an external force acts on the objective-lens mounting member, the objective-lens mounting member moves in the direction intersecting the optical axis of the objective-lens unit relative to the base member due to the action of the support mechanism. Therefore, particularly when moving the objective lens unit at an angle, it is possible to prevent an excessive external force from acting on the tip of the objective lens unit, and it is thus possible to prevent damage to the objective lens unit and the specimen.

According to the present invention, by rotating the objective-lens mounting member, on which the objective lens unit is mounted, relative to the base member about the optical axis thereof, a notch in the inner guard portion is aligned with the outer guard portion and a notch in the outer guard portion is aligned with the inner guard portion, which allows them to be disengaged in the axial direction and easily separated. Also, when the objective-lens mounting member is to be mounted to the base member, the notch in the inner guard portion is aligned with the outer guard portion and the notch in the outer guard portion is aligned with the inner guard portion, and they are brought close together in the axial direction so that the inner guard portion is mounted on the outer guard portion in the axial direction. At that point, the inner guard portion and the outer guard portion are relatively rotated and engaged in the axial direction, which allows the objective-lens mounting portion to be easily attached. By rotating the base member and the objective-lens mounting member relative to each other by a predetermined angle, it is possible to easily attach and detach the objective lens mounting member at the examination site without performing a delicate procedure to engage the objective lens unit using a screw. Therefore, it is possible to simplify the work required for preparation.

In the configuration described above, a locking mechanism is preferably provided in the inner guard portion and the outer guard portion for preventing relative rotation about the optical axis when the inner guard portion and the outer guard portion are engaged in the axial direction.

With this configuration, the base member and the objective-lens mounting member are relatively rotated by operating the lock mechanism. Therefore, the objective-lens mounting member to which the objective lens is mounted can be kept attached to the base member, and therefore, it is possible to prevent shifting during examination.

In the configuration described above, a guide mechanism is preferably provided in the inner guard portion and the outer guard portion for guiding thereof to align center axes of the objective lens unit and the base member are aligned when the inner guard portion and the outer guard portion are engaged in the axial direction.

With this configuration, by rotating the objective-lens mounting member relative to the base member, when the outer guard portion and the inner guard portion are engaged in the axial direction, they are guided by the guide mechanism so that the center axes of the objective lens unit and the base member are aligned. Therefore, optical axis alignment of the objective lens is performed automatically, which allows examination to be commenced quickly.

In the configuration described above, a detector may be provided in the support mechanism for detecting relative motion of the objective-lens mounting member with respect to the base member.

With this configuration, relative rotation of the objective-lens mounting member with respect to the base member is detected with the detector. Relative rotation of the objective-lens mounting member with respect to the base member during examination occurs when an external force acts on the tip of the objective lens unit. In such a case, when an excessive external force continues to act on the tip of the objective lens unit, there is a possibility of the objective lens unit or the specimen being damaged. Therefore, by detecting such an event, it is possible to maintain the integrity of the objective lens unit and the specimen.

In the configuration described above, preferably, an objective-lens mounting mechanism for mounting an objective lens in such a manner as to enable attachment and detachment thereof to and from the apparatus main body, wherein the objective-lens mounting mechanism includes an objective-lens advancing-and-retracting mechanism for advancing and retracting a tip of the objective lens in the optical axis direction, and an attaching-and-detaching mechanism for attaching and detaching the objective lens to and from the apparatus main body when the tip of the objective lens is retracted in the optical axis direction.

With this configuration, when removing the objective lens from the apparatus main body, the objective-lens mounting mechanism is operated. Therefore, the tip of the objective lens is retracted in the optical axis direction by the objective-lens advancing-and-retracting mechanism. The objective lens can be removed from the apparatus main body by operating the attaching-and-detaching mechanism in this state. Also, when the objective lens is attached to the apparatus main body, the objective-lens mounting mechanism is operated and the objective lens is attached to the apparatus main body with the attaching-and-detaching mechanism. Thereafter, the tip of the objective lens is retracted in the optical axis direction with the objective lens advancing-and-retracting mechanism. Therefore, it is possible to locate the tip of the objective lens at the same position as before the objective lens was replaced.

In this case, according to the present invention, the tip of the objective lens is advanced and retracted in the optical axis direction by the objective-lens advancing-and-retracting mechanism when attaching and detaching the objective lens. Therefore, even though examination is carried out while the tip of the objective lens is inserted inside the specimen, it is possible to attach and detach the objective lens when it is retracted from the specimen. Therefore, it is not necessary to operate the focusing unit when attaching and detaching the objective lens. This allows the configuration to be simplified, the required space to be reduced, and the objective lens to be located at the same position before and after replacing it.

In the configuration described above, the objective-lens advancing-and-retracting mechanism may be formed of a telescopic mechanism provided on one of the apparatus main body and the objective lens.

With this configuration, it is possible to advance and retract the tip of the objective lens in the optical axis direction simply by extending and collapsing the telescope mechanism.

The configuration described above may further include a rotating mechanism, at the rear end of the objective lens, for rotating the objective lens about an axis substantially perpendicular to the optical axis direction once the tip of the objective lens is retracted in the optical axis direction by the objective-lens advancing-and-retracting mechanism.

With this configuration, it is possible to rotate the objective lens about the axis substantially perpendicular to the optical axis direction by operating the rotating mechanism. Therefore, when attaching and detaching the objective lens, it is possible to attach and detach the objective lens once it is sufficiently retracted from the specimen.

In the configuration described above, the objective-lens advancing-and-retracting mechanism may include a dovetail groove provided parallel to the optical axis direction on one of the apparatus main body and the objective lens, and a dovetail tenon, provided in the other one of the apparatus main body and the objective lens, for engaging with the dovetail groove in such a manner as to allow movement along the dovetail groove; and the attaching-and-detaching mechanism may comprise a notch formed in the dovetail groove for disengaging from the dovetail tenon at the retracted position of the objective lens.

With this configuration, by moving the dovetail tenon along the dovetail groove, the objective lens is moved in the optical axis direction relative to the apparatus main body, and the dovetail tenon is engaged with a notch formed in the dovetail groove. This allows the dovetail tenon and the dovetail groove to be disengaged, and the objective lens can be separated from the apparatus main body.

In the configuration described above, the attaching-and-detaching mechanism may include a dovetail groove provided parallel to a direction intersecting the optical axis direction on one of the apparatus main body and the objective lens, and a dovetail tenon, provided on the other one of the apparatus main body and the objective lens, for engaging with the dovetail groove in such a manner as to allow movement along the dovetail groove.

With this configuration, by moving the dovetail tenon along the dovetail groove, it is possible to easily attach and detach the objective lens to and from the apparatus main body. In this case, by enabling the objective lens to move at an angle along the optical axis, it is possible to attach and detach the objective lens while advancing and retracting it in the optical axis direction with respect to the apparatus main body. Also, when the objective lens can move in a direction perpendicular to the optical axis, the tip of the objective lens can move in a direction perpendicular to the optical axis while retracted by the objective-lens advancing-and-retracting mechanism, wand the objective lens can be separated from the apparatus main body.

According to the present invention, when an external force acts on the tip of an objective lens in a direction intersecting the optical axis thereof, that external force is effectively relieved, which affords the advantage that it is possible to maintain the integrity of the objective lens and the specimen.

Therefore, according to the present invention, when an external force acts on the tip of the objective lens in a direction intersecting the optical axis, it is possible to effectively relieve that external force and to maintain the integrity of the objective lens unit or specimen. Furthermore, it is possible to easily attach and detach the objective lens unit, which affords an advantage in that the procedure for replacing the objective lens unit at the examination site is simplified and the burden on the operator can be reduced.

Furthermore, the present invention affords the advantage that the costs can be reduced, the required space can be reduced, and the magnification can be changed rapidly.

### BRIEF DESCRIPTION OF THE SEVERAL VIEWS OF THE DRAWINGS

Fig. 1 is a longitudinal section view showing a microscope examination apparatus according to a first embodiment of the present invention.

Fig. 2 is a magnified partial cross-sectional view showing a support mechanism of the microscope examination apparatus in Fig. 1.

Fig. 3 is a longitudinal sectional view showing a case where an external force acts on the tip of an objective lens unit in the microscope examination apparatus in Fig. 1.

Fig. 4 is a magnified partial cross-sectional view showing the support mechanism in the microscope examination apparatus in Fig. 3.

Fig. 5 is a magnified partial cross-sectional view showing a first modification of the microscope examination apparatus in Fig. 1.

Fig. 6 is an elevational view showing a second modification of the microscope examination apparatus in Fig. 1.

Fig. 7 is a magnified partial cross-sectional view showing a third modification of the microscope examination apparatus in Fig. 1.

Fig. 8 is a magnified partial cross-sectional view showing the operation of a support mechanism in the microscope examination apparatus in Fig. 7.

Fig. 9 is an elevational view showing a fourth modification of the microscope examination apparatus in Fig. 1.

Fig. 10 is a longitudinal sectional view showing a microscope examination apparatus according to a second embodiment of the present invention.

Fig. 11 is a magnified partial cross-sectional view showing a support mechanism in the microscope examination apparatus in Fig. 10.

Fig. 12 is a perspective view showing an objective-lens mounting member and an inner guard member constituting the support mechanism in Fig. 11.

Fig. 13 is a perspective view showing the relationship between the objective-lens mounting member and the inner guard member when the objective lens unit is coupled to the base member, in the microscope examination apparatus shown in Fig. 10.

Fig. 14 is a magnified partial longitudinal sectional view showing the support mechanism when the objective-lens mounting member is pushed in the axial direction relative to the base member.

Fig. 15 is a perspective view showing the relationship between the objective-lens mounting member and the inner guard member in the state shown in Fig. 14.

Fig. 16 is a perspective view showing a state where the objective-lens mounting member in Fig. 15 is rotated about its axis with respect to the inner guard member.

Fig. 17 is magnified partial longitudinal sectional view showing the support mechanism when the objective-lens mounting member is separated from the base member.

Fig. 18 is a perspective view showing the relationship between the objective-lens mounting member and the inner guard member in the state shown in Fig. 17.

Fig. 19 is a longitudinal sectional view showing a case where an external force acts on the tip of the objective lens unit in a direction intersecting the optical axis direction, in the microscope examination apparatus in Fig. 10.

Fig. 20 is a magnified partial longitudinal sectional view showing the support mechanism of the microscope examination apparatus in the state shown in Fig. 19.

Fig. 21 is a magnified longitudinal sectional view showing an example of a detector for detecting displacement of the objective-lens mounting member.

Fig. 22 is a partial longitudinal sectional view for explaining attachment and detachment of the objective lens unit using a protector.

Fig. 23 is a longitudinal section view showing a mechanism for preventing the objective lens unit from accidentally falling off.

Figs. 24A, 24B, and 24C are magnified views for explaining the mechanism shown in Fig. 23, wherein Fig. 24A is a longitudinal sectional view when the mechanism is engaged, Fig. 24B is a longitudinal sectional view when the mechanism is released, and Fig. 24C is a plan view of the mechanism.

Fig. 25 is a perspective view showing a microscope examination apparatus according to a third embodiment of the present invention.

Fig. 26 is a perspective view illustrating examination of a specimen by the microscope examination apparatus in Fig. 25.

Fig. 27 is a perspective view showing the microscope examination apparatus in Fig. 25 when the objective lens is retracted in the optical axis direction.

Fig. 28 is a perspective view showing the microscope examination apparatus in Fig. 25 when the objective lens is removed.

Fig. 29 is a perspective view showing a microscope examination apparatus according to a fourth embodiment of the present invention when examining a specimen.

Fig. 30 is a perspective view showing the microscope examination apparatus in Fig. 29 when the objective lens is removed.

Fig. 31 is a perspective view showing a microscope examination apparatus according to a fifth embodiment of the present invention when examining a specimen.

Fig. 32 is a perspective view showing the microscope examination apparatus in Fig. 31 when the objective lens is removed.

Fig. 33 is a perspective view showing a modification of the microscope examination apparatus in Fig. 31.

Fig. 34 is a perspective view showing a microscope examination apparatus according to a sixth embodiment of the present invention when examining a specimen.

Fig. 35 is a perspective view showing the microscope examination apparatus in Fig. 34 when the objective lens is removed.

### DETAILED DESCRIPTION OF THE INVENTION

### First Embodiment

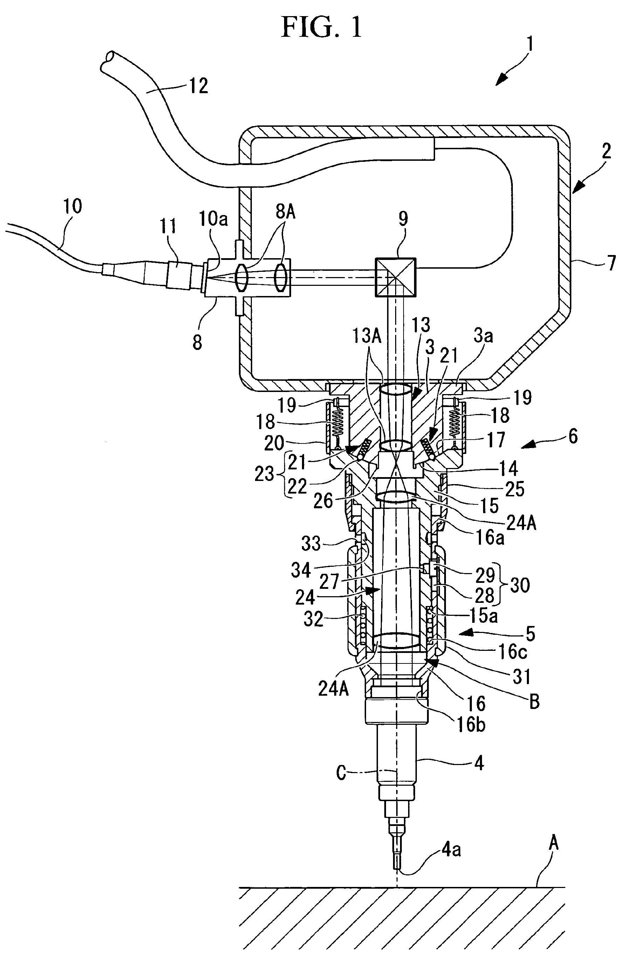

A microscope examination apparatus 1 according to a first embodiment of the present invention will be described below with reference to Figs. 1 to 4.

The microscope examination apparatus 1 of this embodiment is used to examine the interior of a specimen A, which is a living organism such as small laboratory animal, like a mouse.

As shown in Fig. 1, the microscope examination apparatus 1 according to this embodiment includes an apparatus main body (microscope main body) 2, a base member 3 which is secured to the apparatus main body 2, an objective-lens mounting member 5, disposed in contact with the base member 3, for mounting an objective lens unit 4 so as to enable attachment and detachment thereof, and a support mechanism 6 for supporting the objective-lens mounting member 5 relative to the base member 3.

The apparatus main body 2 includes a main body case 7, a collimator unit 8 which is secured to the main body case 7, and an optical scanning unit 9 for two-dimensionally scanning light collimated by the collimator unit 8.

The end of an optical fiber 10 that guides light from a light source (not shown) is secured to the collimator unit 8 with a connector 11. The connector 11 is fixed to the collimator unit 8 so as to be slightly inclined relative to the optical axis. This provides a structure in which a light-emitting face 10a of the optical fiber 10 is formed at an incline with respect to the longitudinal direction, which prevents light reflected inside the optical fiber 10 at the light-emitting face 10a from returning to an optical detector (not shown) provided at the light source side. Light emitted from the light-emitting face 10a of the optical fiber 10 is converged upon passing through lenses 8A in the collimator unit 8 and is converted to a collimated beam.

The optical scanning unit 9 is formed of so-called proximity galvanometer mirrors in which two galvanometer mirrors (not shown in the drawing) that are supported so as to be capable of oscillating back and forth about two mutually orthogonal axes thereof are disposed adjacent to each other. Each galvanometer mirror can be oscillated back and forth at a predetermined speed by actuators (not shown in the drawing), based on control signals sent from an external control unit (not shown) via a cable 12. Accordingly, the collimated beam is two-dimensionally scanned.

The base member 3 includes a substantially cylindrical flange 3a for securing the base member 3 to the main body case 7. Also, the base member 3 includes a pupil-projection lens unit 13 formed of a plurality of lenses 13A for focusing the light scanned by the optical scanning unit 9 to form an intermediate image. A spherical surface 14 that contacts the objective-lens mounting member 5 is provided at one end of the base member 3.

The objective-lens mounting member 5 includes a first cylindrical portion 15 disposed in contact with the base member 3 and a second cylindrical portion 16 which is fitted to the outer side of the first cylindrical portion 15 so as to be capable of moving in the axial direction.

The first cylindrical portion 15 has an inner spherical surface 17 having a shape that is complementary with the spherical surface 14 of the base member 3.

The support mechanism 6 includes the spherical surface 14 provided in the base member 3, the inner spherical surface 17 provided in the first cylindrical portion 15, and urging members formed of a plurality of coil springs 18 disposed so as to bridge the base member 3 and the first cylindrical portion 15. The coil springs 18 are provided, for example, at three uniformly-spaced locations around the circumference of the base member 3. Reference numerals 19 are shafts for attaching the coil springs 18, and reference numeral 20 is a cover for covering the coil springs 18. Reference numeral 26 is a stopper against which the first cylindrical portion 15 abuts when rotated by a predetermined angle with respect to the base member 3.

A click mechanism 23 is disposed between the spherical surface 14 and the inner spherical surface 17, which are in contact with each other. The click mechanism 23 is formed of a plurality of ball plungers 21 and indentations 22 which engage at the position where the central axis of the base member 3 and the central axis of the first cylindrical portion 15 are aligned.

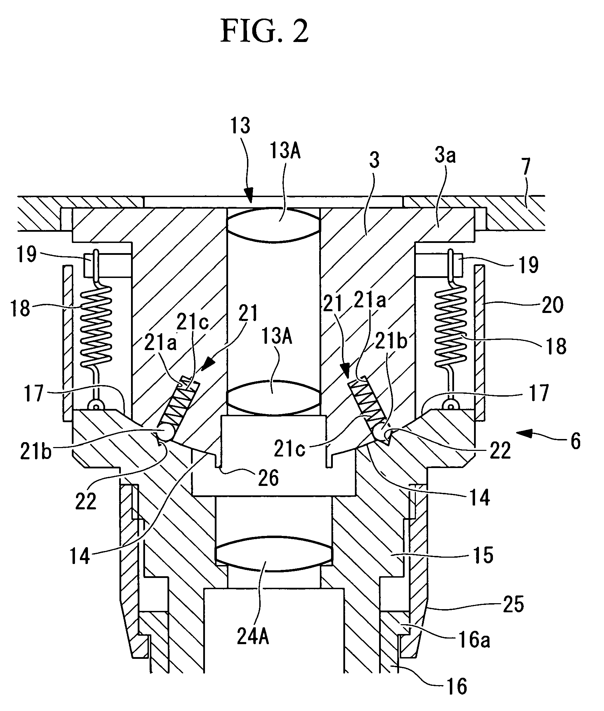

As shown in Fig. 2, the ball plungers 21 are formed of balls 21b which are movably accommodated inside guide holes 21a that extend in the radial direction from the spherical surface 14, and springs 21c that urge the balls 21b towards the outside in the radial direction. The balls 21b of the ball plungers 21 are urged by the springs 21c so as to protrude from the guide holes 21a and engage with the indentations 22 in the inner spherical surface 17. This allows the first cylindrical portion 15 to be locked relative to the base member 3 with a locking force that corresponds to the urging force of the springs 21c.

The first cylindrical portion 15 is provided with an image-forming lens unit 24 having an image-forming lens 24A for collecting and imaging the light forming the intermediate image of the pupil-projection lens unit 13.

A guard portion 16a that extends in the outer radial direction is provided at one end of the second cylindrical portion 16. A threaded portion 16b for securing the objective-lens unit 4 is provided at the other end of the second cylindrical portion 16.

A holder 25 that engages with the guard portion 16a of the objective-lens mounting member 5 is secured to the first cylindrical portion 15. A threaded hole 27 is provided in the outer surface of the first cylindrical portion 15 in the radial direction. An elongated hole 28 that extends a predetermined length in the axial direction is formed in the second cylindrical portion 16 at a position corresponding to the threaded hole 27. A bolt 29 is screwed into the threaded hole 27 via this elongated hole 28. The elongated hole 28 has a width dimension that is slightly larger than the diameter of the head of the bolt 29. Therefore, the head of the bolt 29 is capable of relative motion in the axial direction inside the elongated hole 28, whereas relative motion between the elongated hole 28 and the bolt 29 in the circumferential direction is prevented. This constitutes a rotation-locking mechanism 30.

In Fig. 1, reference numeral 31 indicates a cover member for covering the head of the bolt 29 and the elongated hole 28. The cover member 31 is formed of rubber, for example; gripping it when attaching and detaching the objective lens unit 4 facilitates attachment and detachment because the objective-lens mounting member 5, to which the objective lens unit 4 is mounted, can be held without slipping. The cover member 31 completely covers the elongated hole 28 provided in the second cylindrical portion 16 and prevents dust from getting into the elongated hole 28. In addition, covering the elongated hole 28 and the bolt 29 improves the external appearance.

Stepped portions 15a and 16c, which are disposed opposite each other in the axial direction around the entire circumference, are formed in the outer surface of the first cylindrical portion 15 and the inner surface of the second cylindrical portion 16. A coil spring 32 is sandwiched between these stepped portions 15a and 16c. Even when the distance between the stepped portions 15a and 16c is at its widest, the coil spring 32 is compressed by a certain amount so that it always urges in a direction that widens the distance between the stepped portions 15a and 16c.

In other words, as shown in Fig. 2, the objective-lens mounting member 5 is urged in a direction towards the front end thereof by the urging force of the coil spring 32. Because the guard portion 16a provided at the rear end thereof abuts against the holder 25, displacement past a certain point towards the front end along the optical axis C is restricted, and the objective-lens mounting member 5 can thus be precisely located at that position. Also, when a front end 4a of the objective lens unit 4 makes contact with an object other than the specimen A and is pressed in the direction of optical axis C, and when the pressing force exceeds the urging force of the coil spring 32, the second cylindrical portion 16, to which the objective lens unit 4 is mounted, moves relative to the first cylindrical portion 15 so that it is pushed backwards along the optical axis C.

In such a case, the second cylindrical portion 16 is displaced with respect to the first cylindrical portion 15 along the optical axis C so as to change the optical path length at position B of the substantially collimated beam emitted from the image-forming lens unit 24.

In the microscope examination apparatus 1 according to this embodiment, a female thread 33 is formed to pass through the second cylindrical portion 16 in the radial direction, and an indentation 34 is formed in the first cylindrical portion 15 at a position aligned with the female thread 33 when the objective-lens mounting member 5 is disposed at the front-most end. Thus, with the female thread 33 and the indentation 34 aligned, a fastening member (not shown in the drawing) is engaged with the female thread 33 from the outside, and the tip thereof can be located in the indentation 34. The fastening member has a male thread at the tip that engages with the female thread 33 and a knob that is gripped for engaging the male thread, and it may be attached to the main body case 7 by a chain or the like.

By engaging the male thread of the fastening member with the female thread 33 of the second cylindrical portion 16 and positioning the tip of the fastening member in the indentation 34 in the first cylindrical portion 15, relative displacement of the objective lens unit 4 with respect to the apparatus main body 2 can be prevented. In other words, even when the objective lens unit 4 is pressed by a sufficient pressing force by compressing the coil spring 32, the tip of the fastening member is engaged with the inner surface of the indentation 34 in the direction of the optical axis C, which prevents relative displacement of the objective lens unit 4 with respect to the apparatus main body 2. A through-hole may be provided in the second cylindrical portion 16, for engaging the male thread of the fastening member with the female thread formed in the first cylindrical portion 15.

The operation of the microscope examination apparatus 1 according to this embodiment, having such a configuration, will be described below.

To use the microscope examination apparatus 1 according to this embodiment, first, an arm (not shown) for supporting the apparatus main body 2 is operated to set a desired position and orientation of the apparatus main body 2. Then, an incision is made in the specimen A, which is a living organism such as a laboratory animal, and the tip 4a of the objective lens unit 4 is inserted into the opening.

The invention is not limited to the case of an incision made in the specimen A, however; the microscope examination apparatus 1 according to this embodiment may also be used to carry out external examination without making an incision in thin skin, such as that of the ear, for example.

The apparatus main body 2 is fixed at the desired position, excitation light, for example, laser light, is supplied from a light source (not shown in the drawing), and the optical scanning unit 9 is operated. The excitation light emitted from the light source propagates in the optical fiber 10 and is then guided inside the apparatus main body 2 via the connector 11. Because the collimator unit 8 is fixed to the apparatus main body 2, the excitation light emitted inside the main body case 7 from the light-emitting face 10a of the optical fiber 10 is converted to a collimated beam upon passing through the lenses 8A in the collimator unit 8.

The collimated excitation light is then incident on the optical scanning unit 9. By oscillating the proximity galvanometer mirrors back and forth, the optical scanning unit 9 deflects the excitation light by 90° (in Fig. 1, horizontally incident excitation light is deflected vertically), and the excitation light is two-dimensionally scanned. The scanned excitation light forms an intermediate image upon passing through the pupil-projection lens unit 13 and is thereafter converted to a collimated beam upon passing through the image-forming lens unit 24. Then, the collimated beam emitted from the image-forming lens unit 24 is introduced to the objective lens unit 4 and is re-imaged at a focal point a predetermined working distance in front of the tip 4a thereof.

When the excitation light is incident on the specimen A, fluorescent material present inside the specimen A becomes excited and generates fluorescence. The fluorescence generated returns back inside the objective lens unit 4 from the tip 4a of the objective lens unit 4, passes through the image-forming lens unit 24, the pupil-projection lens unit 13, the optical scanning unit 9, and the collimator unit 8, enters the optical fiber 10, and returns to the light source side. At the light source side, the fluorescence is split-off from the excitation light by a dichroic mirror (not shown in the drawing) and is detected by a optical detector (not shown), for example, a photomultiplier tube (PMT). Then, the detected fluorescence is converted to an image and is displayed on a monitor.

If the optical fiber 10 has a sufficiently small core diameter, such as a single-mode fiber, the end of the optical fiber 10 is in a conjugate positional relationship with the image position of the tip 4a of the objective lens unit 4, thus constituting a confocal optical system. Thus, only fluorescence light produced close to the image position of the tip 4a of the objective lens unit 4 enters the optical fiber 10, and therefore, a high resolution image can be obtained. If the optical fiber 10 has a larger core diameter, although the resolution is degraded, it is still possible to obtain bright images having depth.

If the apparatus main body 2 and the objective lens unit 4 are moved, while viewing the obtained image, in the direction of the optical axis C thereof to search for a desired examination site, the image position of the excitation light moves in the direction of the optical axis C. As a result, it is possible to change the examination position in the depth direction.

In such a case, when the tip 4a of the objective lens unit 4 encounters a relatively hard object, such as hard tissue, inside the specimen A, an external force is applied to the tip 4a of the objective lens unit 4.

First, a case where an external force acts on the tip 4a of the objective lens unit 4 in the direction of the optical axis C will be described.

When the external force acting on the tip 4a of the objective lens unit 4 in the direction of the optical axis C exceeds the urging force of the coil spring 32, the coil spring 32 is deformed in the compressive direction, and the objective lens unit 4 and the second cylindrical portion 16 are displaced relative to the apparatus main body 2 in the direction of the optical axis C. Therefore, it is possible to prevent a large pressing force from acting on the tip 4a of the objective lens unit 4, and therefore, it is possible to prevent damage to the objective lens unit 4 and the specimen A.

In this case, with the microscope examination apparatus 1 according to this embodiment, because a shock-absorbing mechanism including the coil spring 32 described above is provide in the apparatus main body 2 instead of in the vicinity of the tip 4a of the objective lens unit 4, the construction at the tip 4a of the objective lens 4 can be simplified and the diameter can be reduced. Therefore, when examining the interior of the specimen A, such as a living organism, it is possible to keep the size of the incision for inserting the tip 4a of the objective lens unit 4 to the absolute minimum.

As a result, the stress placed to the specimen A can be reduced, and the viability of the specimen A can be maintained for a long period of time. In other words, while the tip 4a of the objective lens unit 4 is inserted in the specimen A, such as a living organism, it is possible to continue to perform in-vivo examination of the living organism for a long period of time.

Furthermore, with the microscope examination apparatus 1 according to this embodiment, which is not provided with the shock-absorbing mechanism in the objective lens unit 4, when replacing the objective lens unit 4 with another one having a different magnification or tip shape and attaching it to the objective-lens mounting member 5, it is not necessary to provide a shock-absorbing mechanism in each objective lens unit 4. Therefore, an advantage is afforded in that it is possible to reduce the overall cost of the apparatus. In addition, because no movable parts for the shock-absorbing mechanism are provided in the objective lens unit 4, it is possible to easily make the objective lens unit 4 waterproof. Therefore, it is possible to provide a microscope examination apparatus 1 that is suitable for performing examination while the tip 4a of the objective lens unit 4 is inserted inside the specimen A, which includes liquid such as bodily fluids.

Moreover, with the microscope examination apparatus 1 according to this embodiment, when the objective lens unit 4 is displaced relative to the apparatus main body 2, the optical path length at the position B of the collimated beam emitted from the image-forming lens unit 24 is changed. Therefore, even if the objective lens unit 4 is displaced in the direction of the optical axis C, its imaging relationship does not change.

In other words, while the tip 4a of the objective lens unit 4 is pressed against the specimen A, even if the objective lens unit 4 is pushed back in the direction of the optical axis C by that pressing force, the image displayed on the monitor does not go out of focus. Therefore, by ensuring a sufficient amount of relative displacement of the objective lens unit 4 with respect to the apparatus main body 2, it is possible to perform examination of the same position while relatively displacing the objective lens unit 4 with respect to the apparatus main body 2.

For example, if the specimen A is a living organism such as a mouse or the like, when performing in-vivo examination of the living organism, the surface of the specimen A moves due to the heart beat, pulsation of blood vessels, respiration, and so forth. In such a case, by using the microscope examination apparatus 1 according to this embodiment, the tip 4a of the objective lens unit 4 is pressed against the specimen A, and examination is carried out at the position where the objective lens unit 4 is slightly pushed back towards the apparatus main body 2.

Accordingly, when the specimen A is pressed by the pressing force of the objective lens unit 4 and pulses or the like with a force greater than this pressing force, it is possible to carry out examination while the objective lens unit 4 moves in compliance with the pulsing or the like. In this case, because the imaging relationship does not change, even though the objective lens unit 4 moves, it is possible to continue to display clear, in-focus images.

In the microscope examination apparatus 1 according to this embodiment, because the objective lens unit 4 can be attached and detached at the position B of the collimated beam output from the image-forming lens unit 24, the objective lens unit 4 is an infinity optical system. Therefore, by designing the threaded portion 16b of the objective-lens mounting member 5 to have the gauge used in standard microscopes, it is possible to attach and detach a standard microscope objective lens unit.

In addition, with the microscope examination apparatus 1 according to this embodiment, the head of the bold 29 fastened to the first cylindrical portion 15 is located inside the elongated hole 28 formed in the second cylindrical portion 16 to prevent rotation of the objective lens unit 4 in the circumferential direction relative to the apparatus main body 2. Therefore, it is possible to prevent variations in the optical characteristics of the entire apparatus due to the objective lens unit 4 rotating relative to the image-forming lens unit 24. Also, when attaching and detaching the objective lens unit 4 to and from the threaded portion 16b provided on the objective-lens unit mounting member 5, because the objective-lens unit mounting member 5 is prevented from rotating, an advantage is afforded in that attachment and detachment of the objective lens unit 4 can be performed more efficiently.

In the microscope examination apparatus 1 according to this embodiment, by fastening the fastening member with the female thread 33 provide in the second cylindrical portion 16, it is possible to secure the objective lens unit 4 so that it does not shift in the direction of the optical axis C relative to the apparatus main body 2.

By doing so, even if the objective lens unit 4 is pressed with a large pressing force, because it cannot move relative to the apparatus main body 2, the shock-absorbing mechanism does not operate. This is convenient in applications where it is preferable not to operate the shock-absorbing mechanism.

An example of this is when the microscope examination apparatus 1 according to this embodiment is used as a rigid endoscope. When the object being examined, with which the tip 4a of the objective lens unit 4 is in contact, is not hard and there is thus no risk of damaging the objective lens unit 4 even if it is pressed strongly, it is advantageous not to operate the shock-absorbing mechanism when it is desired to make the objective lens unit 4 advance further.

Also, when the objective lens unit 4 is attached to and detached from the objective-lens mounting member 5, it is better to stop the operation of the shock-absorbing mechanism and fix the objective-lens mounting member 5 to make it easier to attach and detach the objective lens unit 4.

Next, a case in which an external force is applied to the tip 4a of the objective lens unit 4 at an angle with respect to the optical axis C will be described.

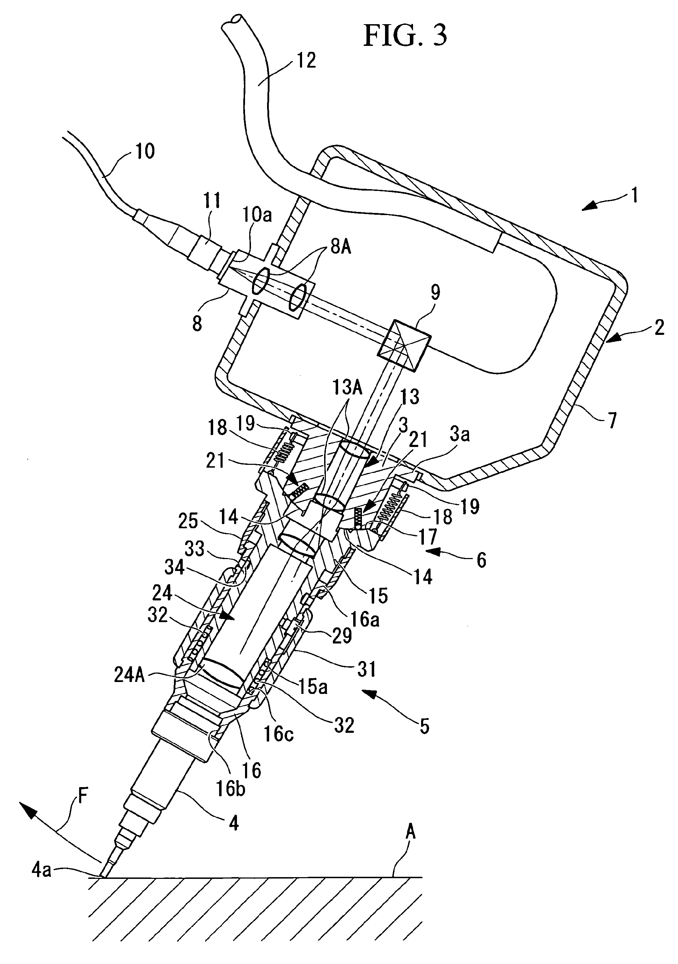

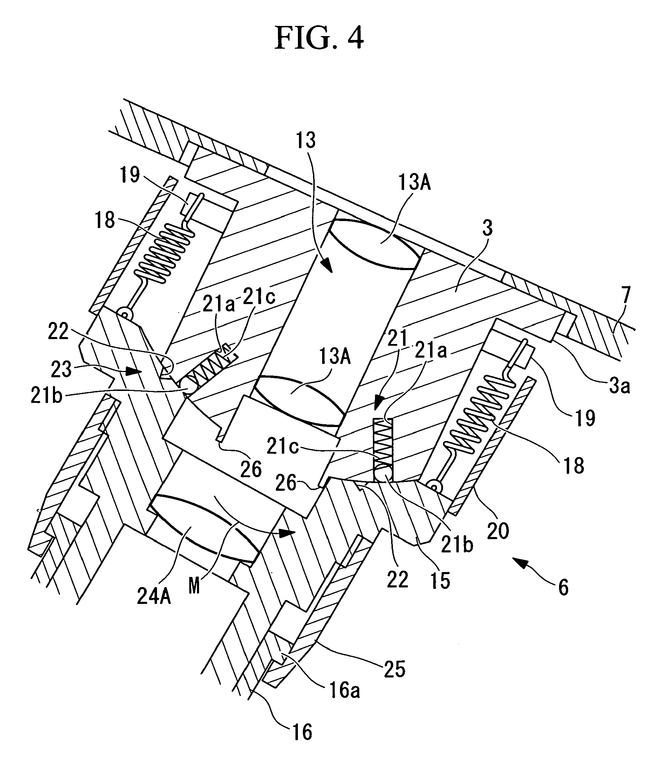

When an external force F applied to the tip 4a of the objective lens unit 4 in a direction at an angle with respect to the optical axis C exceeds the engaging force due to the ball plungers 21 in the click mechanism 23, as shown in Figs. 3 and 4, the balls 21b of the ball plungers 21 compress the springs 21c and are retracted inside the guide hole 21a, thus disengaging the balls 21b and the indentations 22. Therefore, the objective lens unit 4 can be rotated relative to the base member 3 together with the objective-lens mounting member 5.

Therefore, by moving the tip 4a of the objective lens unit 4 backwards in the opposite direction to the external force F, it is possible to prevent an excessively large pressing force from being applied to the tip 4a, and it is thus possible to prevent damage to the objective lens unit 4 and the specimen A. At this time, because the stopper 26 is provided in the base member 3, when the first cylindrical portion 15 abuts against the stopper 26, the first cylindrical portion 15 is prevented from rotating past a predetermined point with respect to the base member 3. Therefore, it is possible to prevent an excessively large pressing force from being exerted on the tip 4a of the objective lens unit 4, and it is possible to ensure that the objective-lens mounting member 5 to which the objective lens unit 4 is attached does not come off the base member 3.

In this case, with the microscope examination apparatus 1 according to this embodiment, because the base member 3 and the first cylindrical portion 15 are in close contact via the spherical surface 14 and the inner spherical surface 17, it is possible to ensure positional accuracy in the direction of the optical axis C. Therefore, by releasing the click mechanism 23, even if the central axis of the base member 3 and the central axis of the first cylindrical portion 15 are shifted, it is possible to duplicate the positional accuracy in the direction of the optical axis C when they are returned to the positions where their central axes are aligned.

According to this embodiment, because a plurality of the coil springs 18 are provided at uniform intervals in the circumferential direction of the base member 3, when the first cylindrical portion 15 rotates relative to the base member 3, some of the coil springs 18 expand and others compress. As a result, respective forces are generated in the compressing direction in the expanded coil springs 18 and in the expanding direction in the compressed coil springs 18.

Accordingly, when the external force F acting on the tip 4a of the objective lens unit 4 is removed, a moment M generated by the force produced by the unbalanced coil springs 18 acts as a restoring force, and the central axis of the base member 3 and the central axis of the first cylindrical portion 15 return to the positions where they are aligned. Then, when both central axes are aligned, the balls 21b of the ball plungers 21 are aligned with the indentations 22; as a result, they are engaged with each other, and the objective lens unit 4 is fixed with respect to the base member 3 at that position. In other words, because they return to the positions where the central axis of the objective lens unit 4 is aligned with the central axis of the base member 3 and are fixed thereat, it is possible to easily carry out subsequent examination.

With the microscope examination apparatus 1 according to this embodiment, because the support mechanism 6 has the spherical surface 14 and the inner spherical surface 17, even if an external force F acts on the tip 4a of the objective lens unit 4 in any direction intersecting the optical axis C, the objective lens unit 4 can be made to rotate in a direction away from that force F. Therefore, it is possible to prevent damage to the objective lens unit 4 as well as to the specimen A in contact therewith.

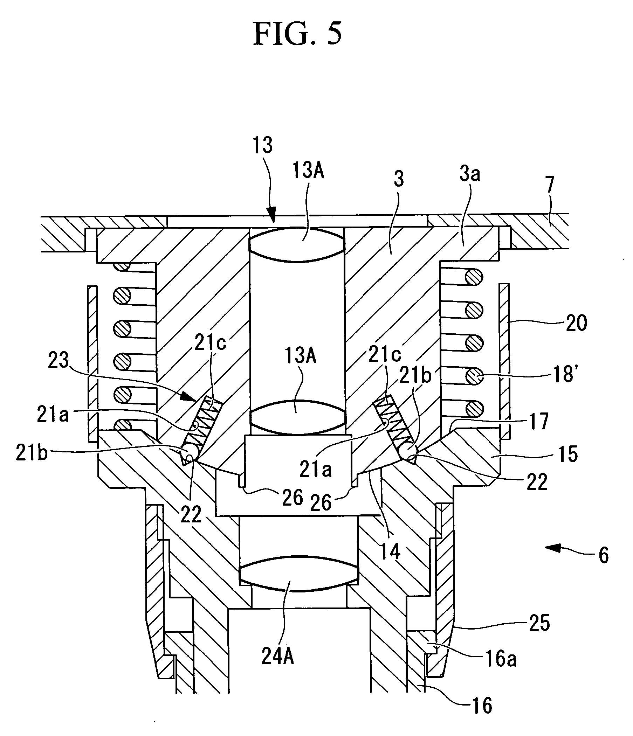

In the microscope examination apparatus 1 according to this embodiment, a plurality of the coil springs 18 are disposed around the base member 3; instead of this, however, as shown in Fig. 5, a single coil spring 18' may be disposed so as to surround the periphery of the base member 3.

Also, although the spherical surface 14 is provided in the base member 3 and the inner spherical surface 17 is provided in the first cylindrical portion 15, instead of this configuration, the spherical surface 14 may be provided in the first cylindrical portion 15 and the spherical surface 17 may be provided in the base member 3. Furthermore, although the ball plungers 21 are provided in the spherical surface 14 and the indentations are provided in the spherical surface 17, the opposite is also acceptable.

The embodiment described above has been illustrated by a configuration in which the support mechanism 6 includes the spherical surface 14 and the inner spherical surface 17, which are in close contact with each other. Instead of this configuration, however, it may include a cylindrical surface and a cylindrical inner surface in close contact with each other. With this configuration, the direction of rotation of the first cylindrical portion 15 with respect to the base member 3 is restricted to one direction; however, when the tilt direction of the microscope examination apparatus 1 with respect to the specimen A or a stage is regulated, by matching the rotation direction to that tilt direction, it is possible to effectively prevent the generation of an excessive pressing force on the tip 4a of the objective lens unit 4, similar to the case described above. Similar to the case of the spherical surface 14 and the inner spherical surface 17, it is also possible to exchange the positions of the cylindrical surface and the cylindrical inner surface, and the positions of the ball plungers and indentations.

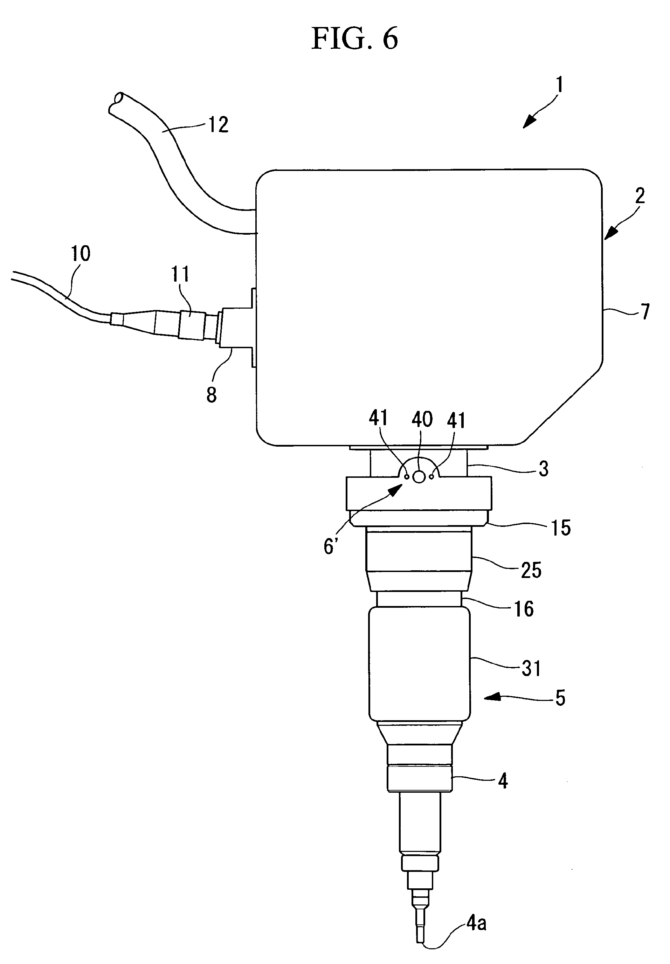

Instead of the support mechanism formed by contacting the cylindrical surface and the cylindrical inner surface, as shown in Fig. 6, it is possible to employ a support mechanism 6' that supports the first cylindrical portion 15 in such a manner that it is capable of rotating relative to the base member 3 by means of a shaft 40. In this case, as described above, it is preferable to position the shaft 40 parallel to a rotation shaft for changing the orientation of the apparatus main body 2. Click mechanisms 41 formed, for example, of ball plunger, indentations, and so forth may be disposed at positions away from the shaft 40.

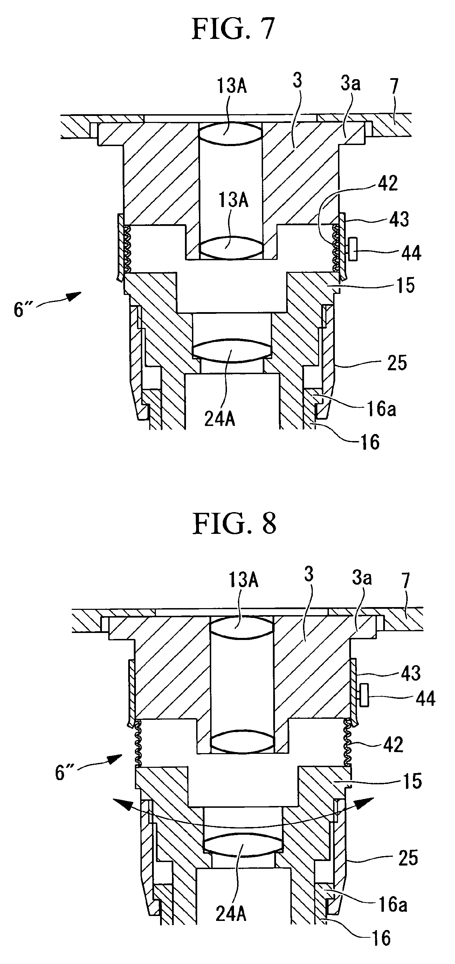

Instead of the support mechanism 6 in which the spherical surface 14 and the inner spherical surface 17, or the cylindrical surface and the inner cylindrical surface, are in contact, as shown in Figs. 7 and 8, it is possible to employ a support mechanism 6" formed by coupling the base member 3 and the first cylindrical portion 15 using a flexible member, such as relatively stiff bellows 42. With this configuration, when an external force acts on the tip 4a of the objective lens unit 4, the bellows 42 flex, which relieves the external force, and therefore, it is possible to ensure that an excessive pressing force is not exerted on the tip 4a of the objective lens unit 4.

In the example shown in Figs. 7 and 8, a slidable correcting tube 43 is provided on the base member 3. When the central axis of the first cylindrical portion 15 and the central axis of the base member 3 are aligned, as shown in Fig. 7, the correcting tube 43 is disposed at a position where it encircles the outer surface of the bellows 42, thus correcting the flexing of the bellows 42 to form a straight line. On the other hand, as shown in Fig. 8, when the bellows 42 can flex, the correcting tube 43 is retracted to the base member 3 side. Therefore, the bellows 42 can easily flex in response to an external force exerted on the tip 4a of the objective lens unit 4, thus protecting the objective lens unit 4 and the specimen A. Reference numeral 44 in Figs. 7 and 8 is a locking screw for fixing the correcting tube 43 to the base member 3.

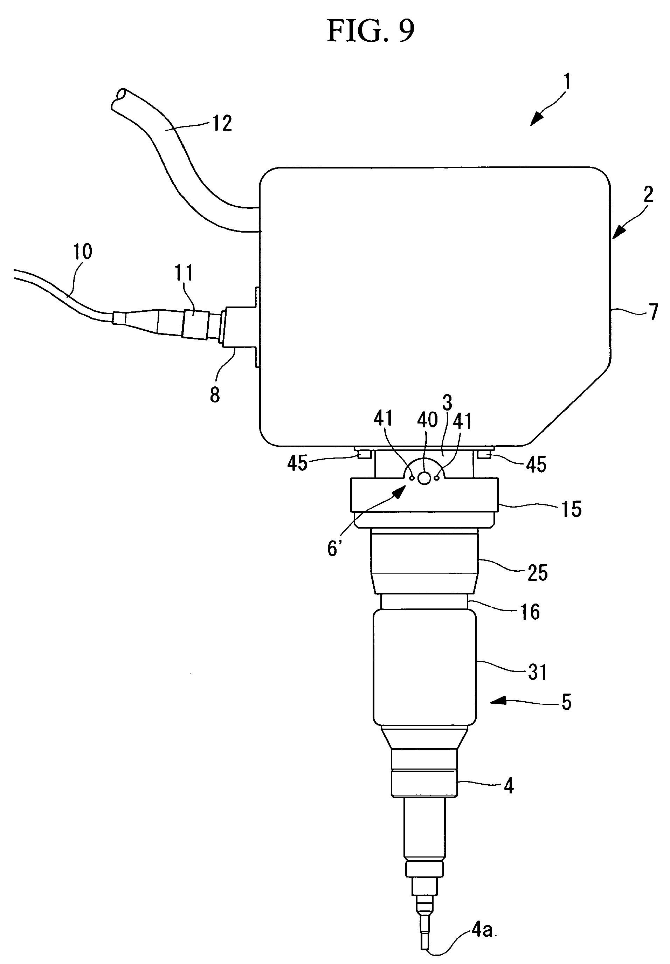

As shown in Fig. 9, sensors 45 may be provided between the base member 3 and the first cylindrical portion 15 for detecting the relative rotation thereof. A plurality of the sensors 45 should be provided in the direction in which the first cylindrical portion 15 swings with respect to the base member 3.

By doing so, even if relative motion that cannot be visually recognized occurs between the base member 3 and the first cylindrical portion 15, it can nevertheless be detected by the sensors 45. This provides an advantage in that it is possible to avoid carrying out examination while the objective lens unit 4 is displaced, thus avoiding the waste of time involved. The sensors 45 may be proximity sensors, for example. Instead of proximity sensors, micro switches which detect contact between the objective lens unit 4 and the specimen A based on a detection signal may be used.

### Second Embodiment

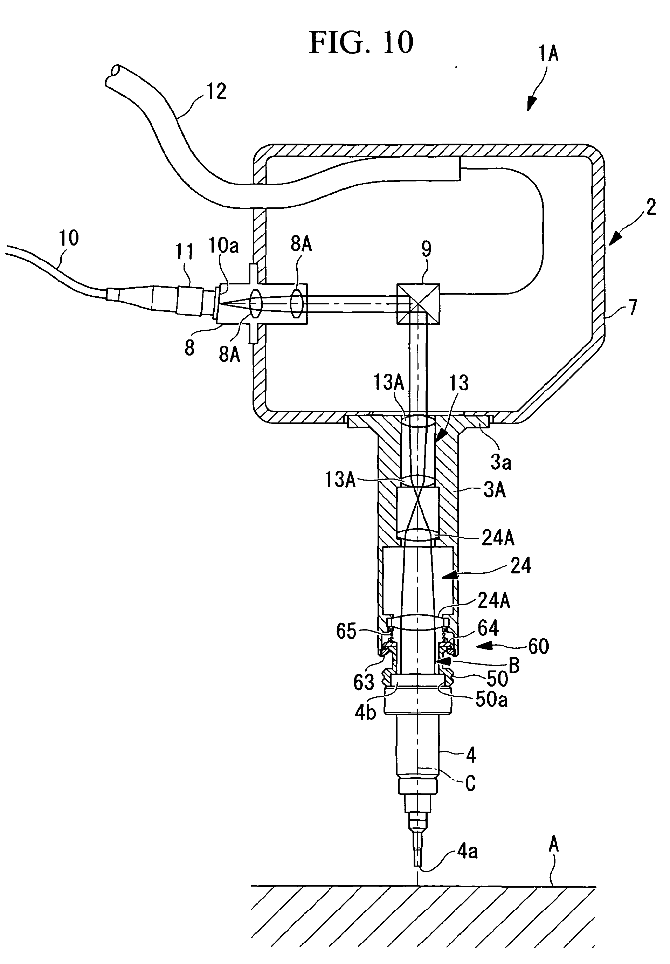

Next, a microscope examination apparatus 1A according to a second embodiment of the present invention will be described with reference to Figs. 10 to 20. Parts identical to those in the embodiment described above are assigned the same reference numerals, and a description thereof will thus be omitted here.

As shown in Fig. 10, the microscope examination apparatus 1A according to this embodiment includes an apparatus main body 2, a base member 3A which is secured to the apparatus main body 2, an objective lens unit 4, an objective-lens mounting member 50 mounted to the objective lens unit 4, and a support mechanism 60 for supporting the objective-lens mounting member 50 relative to the base member 3A.

The base member 3A includes a substantially cylindrical flange 3a for securing to a main body case 7. The base member 3A includes a pupil-projection lens unit 13 formed of a plurality of lenses 13A for focusing light scanned by an optical scanning unit 9 to form an intermediate image. The base member 3A also includes a lens unit 24 having an image-forming lens 24A for collecting and collimating the light forming the intermediate image of the pupil-projection lens unit 13.

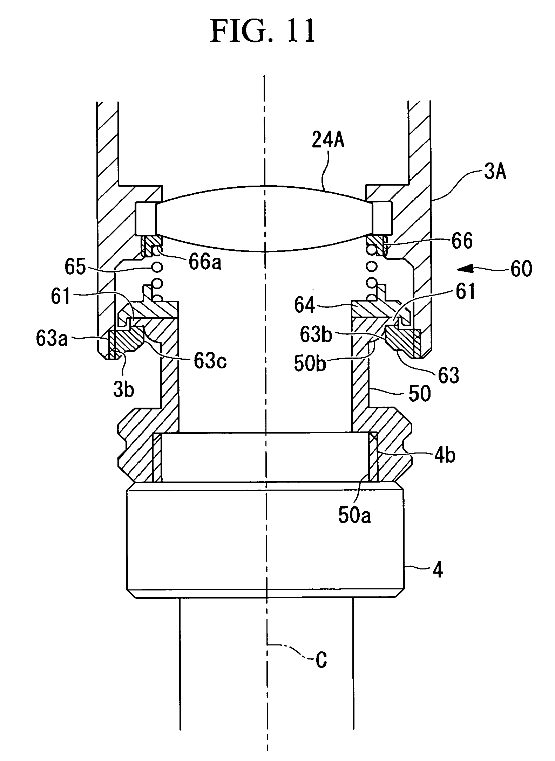

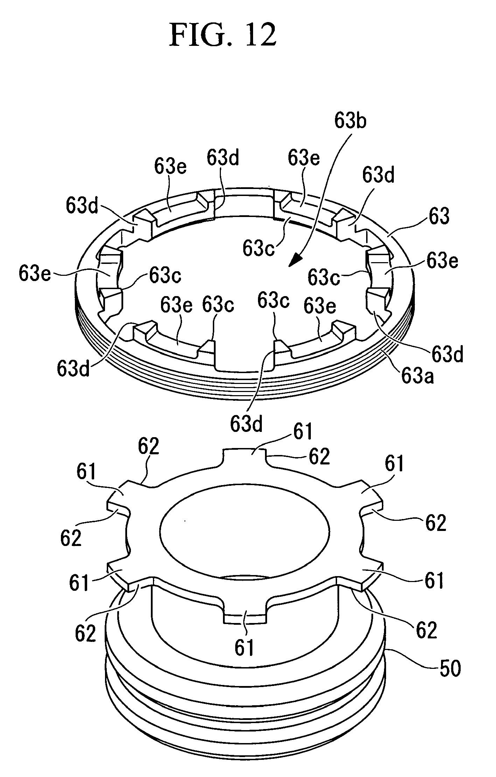

As shown in Fig. 11, the objective-lens mounting member 50 of this embodiment is a substantially cylindrical member having a female threaded portion 50a for engaging with a mounting thread 4b provided on the objective lens unit 4. As shown in Fig. 12, the objective-lens mounting member 50 is provided with outer guard portions 61 constituting part of the support mechanism 60 (described later). The outer guard portions 61 are provided at the end opposite the female threaded portion 50a and project outwards in the radial direction at six locations which are uniformly spaced in the circumferential direction. Notches 62 are formed between these guard portions 61.

As shown in Fig. 11, the support mechanism 60 includes the outer guard portions 61 provided in the objective-lens mounting member 50, an inner guard member 63 attached at the end of the base member 3A, a ring-shaped support plate 64 which covers the inner side of the guard member 63 in the axial direction, and a coil spring (urging member) 65 for urging the support plate 64 in the axial direction.

The inner guard member 63 has a male threaded portion 63a for engaging with the female threaded portion 3b provided at the end of the base member 3A and is secured to the end of the base member 3A by engaging the male threaded portion 63a with the female threaded portion 3b. As shown in Fig. 12, the inner guard member 63 is formed in the shape of a ring having a central through-hole 63b and includes inner guard portions 63c that extend inwards in the radial direction at six uniformly spaced locations in the circumferential direction and notches 63d provided between these inner guard portions 63c.

The central through hole 63b in the inner guard member 63, including the notches 63d, is formed with dimensions that allow the outer guard portions 61 of the objective-lens mounting member 50 to pass therethrough. In other words, the outer guard portions 61 of the objective-lens mounting member 50 can pass through the notches 63d in the inner guard member 63 in the axial direction, and the inner guard portions 63c can pass through the notches 62 between the outer guard portions 61 in the axial direction. Therefore, by aligning the outer guard portions 61 with the notches 63d in the inner guard member 63 and the inner guard portions 63c with the notches between the outer guard portions 61 and bringing them together in the axial direction, it is possible to insert the outer guard portions 61 of the objective-lens mounting member 50 inside the base member 3A.

In each guard portion 63c, indentations (locking mechanisms) 63e having width dimensions larger than the width dimensions of the outer guard portions 63 are provided at central positions in the circumferential direction on the end face disposed inside the base member 3A. As shown in Fig. 11, when the objective-lens mounting member 50 is coupled to the base member 3A, the outer guard portions 61 of the objective-lens mounting member 50 are accommodated in the corresponding indentations 63e provided in the inner guard portions 63c, as shown in Fig. 11. In this state, even if a rotation force about the axis acts on the objective-lens mounting member 50, the side faces in the circumferential direction of the outer guard portions 63 abut against the lateral walls of the indentation 63e, which restricts the rotation.

As shown in Fig. 11, a guide face 50b which progressively widens in the axial direction towards the outer guard portions 61 is provided on the objective-lens mounting member 50, inside the outer guard portions 61 in the radial direction. The maximum diameter of the guide face 50b is substantially the same as the inner diameter of the through-hole 63 in the inner guard member 63.

As shown in Fig. 11, when the objective-lens mounting member 50 is coupled with the base member 3A, the objective-lens mounting member 50 is pressed by the coil spring 65, which presses the support plate 64, and the maximum-diameter position of the guide surface 50b thereof is fitted into the central through-hole 63b. Therefore, the optical axis of the base member 3A and the optical axis C of the objective lens unit 4 can be accurately aligned.

When the outer guard portions 61 of the objective-lens mounting member 50 pass through the notches 63d in the inner guard member 63 in the axial direction and are located inside the base member 3A, the support plate 64 is brought into contact with the end surface of the outer guard member 63 in the axial direction. If the objective-lens mounting member 50 is pushed in this state so that it is inserted further inside the base member 3A, the coil spring 65, which pushes the support plate 64, is compressed, and the support plate 64 moves in the axial direction.

In Fig. 11, reference numeral 66 is a ring nut for securing the image-forming lens 24A, and support indentations 66a for supporting one end of the coil spring 65 are provided in the end face of the ring nut 66.

The operation of the microscope examination apparatus 1A according to this embodiment, having such a configuration, will be described below.

To use the microscope examination apparatus 1A according to this embodiment, first, an arm (not shown) for supporting the apparatus main body 2 is moved to set the apparatus main body 2 at a desired position and orientation. Then, an incision is made in a specimen A, which is a living organism such as a laboratory animal, and the tip 4a of the objective lens unit 4 is inserted into the opening.

The invention is not limited to the case of an incision made in the specimen A, however; the microscope examination apparatus 1A according to this embodiment may also be used to carry out external examination without making an incision in thin skin, such as that of the ear, for example.

The apparatus main body 2 is fixed at the desired position, excitation light, for example, laser light, is supplied from a light source (not shown in the drawing), and the optical scanning unit 9 is operated. The excitation light emitted from the light source propagates in the optical fiber 10 and is then guided inside the apparatus main body 2 via the connector 11. Because the collimator unit 8 is fixed to the apparatus main body 2, the excitation light emitted inside the main body case 7 from the light-emitting face 10a of the optical fiber 10 is converted to a collimated beam upon passing through the lenses 8A in the collimator unit 8.

The collimated excitation light is then incident on the optical scanning unit 9. By oscillating the proximity galvanometer mirrors back and forth, the optical scanning unit 9 deflects the excitation light by 90° (in Fig. 10, horizontally incident excitation light is deflected vertically), and the excitation light is two-dimensionally scanned. The scanned excitation light forms an intermediate image upon passing through the pupil-projection lens unit 13 and is thereafter converted to a collimated beam upon passing through the lens unit 14. Then, the collimated beam emitted from the lens unit 14 is introduced to the objective lens unit 4 and is re-imaged at a focal point a predetermined working distance in front of the tip 4a thereof.

When the excitation light is incident on the specimen A, fluorescent material present inside the specimen A becomes excited and generates fluorescence. The fluorescence generated returns back inside the objective lens unit 4 from the tip 4a of the objective lens unit 4, passes through the lens unit 24, the pupil-projection lens unit 13, the optical scanning unit 9, and the collimator unit 8, enters the optical fiber 10, and returns to the light source side. At the light source side, the fluorescence is split-off from the excitation light by a dichroic mirror (not shown in the drawing) and is detected by an optical detector (not shown), for example, a photomultiplier tube (PMT) . Then, the detected fluorescence is converted to an image and is displayed on a monitor.

If the optical fiber 10 has a sufficiently small core diameter, such as a single-mode fiber, the end of the optical fiber 10 is in a conjugate positional relationship with the image position of the tip 4a of the objective lens unit 4, thus constituting a confocal optical system. Thus, only fluorescence light produced close to the image position of the tip 4a of the objective lens unit 4 enters the optical fiber 10, and therefore, a high resolution image can be obtained. If the optical fiber 10 has a larger core diameter, although the resolution is degraded, it is still possible to obtain bright images having depth.

If the apparatus main body 2 and the objective lens unit 4 are moved, while viewing the obtained image, in the direction of the optical axis C thereof to search for a desired examination site, the image position of the excitation light moves in the direction of the optical axis C. As a result, it is possible to change the examination position in the depth direction.

In such a case, when the tip 4a of the objective lens unit 4 encounters a relatively hard object, such as hard tissue, inside the specimen A, an external force is applied to the tip 4a of the objective lens unit 4.

First, a case where an external force acts on the tip 4a of the objective lens unit 4 in the direction of the optical axis C will be described.

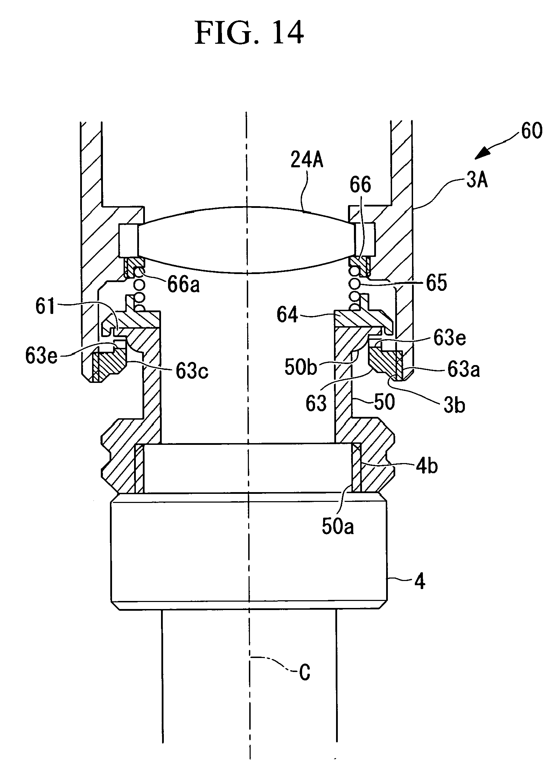

When the external force acting on the tip 4a of the objective lens unit 4 in the direction of the optical axis C exceeds the urging force of the coil spring 65, as shown in Fig. 14, the coil spring 65 is compressed and the support plate 64 moves. As a result, the objective-lens mounting member 50, which is disposed in contact with the support plate 64, and the objective lens unit 4, which is attached to the objective-lens mounting member 50, are also displaced in the direction of the optical axis C relative to the apparatus main body 2. Therefore, it is possible to prevent a large pressing force from acting on the tip 4a of the objective lens unit 4, and therefore, it is possible to prevent damage to the objective lens unit 4 and the specimen A.

In this case, with the microscope examination apparatus 1A according to this embodiment, because the shock-absorbing mechanism including the coil spring 65 mentioned above is provided at the base member 3A side, which is fixed to the apparatus main body 2, instead of in the vicinity of the tip 4a of the objective lens unit 4, the construction at the tip 4a of the objective lens unit can be simplified and the diameter can be reduced. Therefore, when examining the interior of the specimen A, such as a living organism, it is possible to keep the size of the incision for inserting the tip 4a of the objective lens unit 4 to the absolute minimum.

As a result, the load applied to the specimen A can be reduced, and the viability of the specimen A can be maintained for a long period of time. In other words, while the tip 4a of the objective lens unit 4 is inserted in the specimen A, such as a living organism, it is possible to continue to perform in-vivo examination of the living organism for a long period of time.

Furthermore, with the microscope examination apparatus 1A according to this embodiment, which is not provided with the shock-absorbing mechanism in the objective lens unit 4, when replacing the objective lens unit 4 with another one having a different magnification or tip shape, because it is not necessary to provide a shock-absorbing mechanism in each objective lens unit 4, an advantage is afforded in that it is possible to reduce the overall cost of the apparatus. In addition, because no movable parts for the shock-absorbing mechanism are provided in the objective lens unit 4, it is possible to easily make the objective lens unit 4 waterproof. Therefore, it is possible to provide a microscope examination apparatus 1A that is suitable for performing examination while the tip 4a of the objective lens unit 4 is inserted inside a specimen A which includes liquid such as bodily fluids.

Moreover, with the microscope examination apparatus 1A according to this embodiment, when the objective lens unit 4 is displaced relative to the apparatus main body 2, the optical path length at the position B of the collimated beam emitted from the image-forming lens unit 24 is changed. Therefore, even if the objective lens unit 4 is displaced in the direction of the optical axis C, its imaging relationship does not change.

In other words, while the tip 4a of the objective lens unit 4 is pressed against the specimen A, even if the objective lens unit 4 is pushed back in the direction of the optical axis C by that pressing force, the image displayed on the monitor does not go out of focus. Therefore, by ensuring a sufficient amount of relative displacement of the objective lens unit 4 with respect to the apparatus main body 2, it is possible to perform examination of the same position while relatively displacing the objective lens unit 4 with respect to the apparatus main body 2.

For example, if the specimen A is a living organism such as a mouse or the like, when performing in-vivo examination of the living organism, the surface of the specimen A moves due to the heart beat, pulsation of blood vessels, respiration, and so forth. In such a case, by using the microscope examination apparatus 1A according to this embodiment, the tip 4a of the objective lens unit 4 is pressed against the specimen A, and examination is carried out at the position where the objective lens unit 4 is slightly pushed back towards the apparatus main body 2.

Accordingly, when the specimen A is pressed by the pressing force of the objective lens unit 4 and pulses or the like with a force greater than this pressing force, it is possible to carry out examination while the objective lens unit 4 moves in compliance with the pulsing or the like. In this case, because the imaging relationship does not change, even though the objective lens unit 4 moves, it is possible to continue to display clear, in-focus images.

In the microscope examination apparatus 1A according to this embodiment, because the objective lens unit 4 can be attached and detached at the position B of the collimated beam output from the image-forming lens unit 24, the objective lens unit 4 is an infinity optical system. Therefore, by designing the female threaded portion 50a of the objective-lens mounting member 50 to have the gauge used in standard microscopes, it is possible to attach and detach a standard microscope objective lens unit.

Next, the method of replacing the objective lens unit 4 in the microscope examination apparatus 1A according to this embodiment will be described.

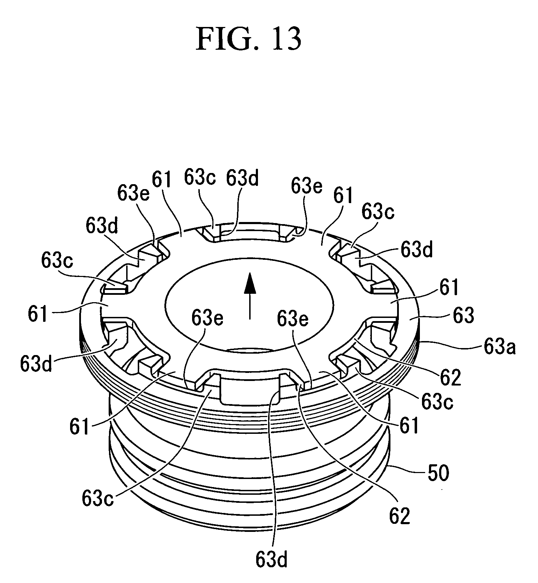

First, as shown in Figs. 11 and 13, in the coupled state in which the outer guard portions 61 of the objective-lens mounting member 50, to which the objective lens unit 4 is attached, are accommodated in the indentations 63e provided in the inner guard portions 63c, a pressing force is applied to the objective-lens mounting member 50 against the urging force of the coil spring 65, as indicated by the arrow in Fig. 13.

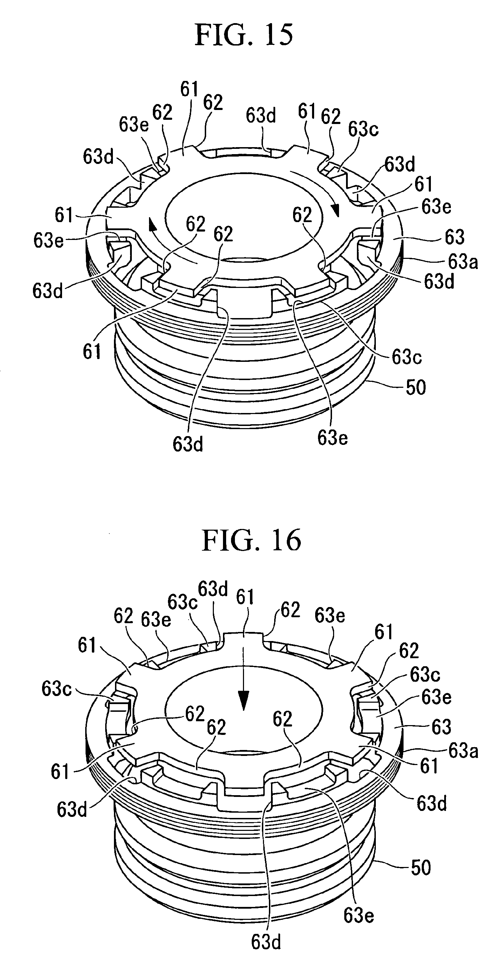

Accordingly, as shown in Fig. 14, the support plate 64 is pressed and the coil spring 65 is compressed, and as shown in Fig. 15, the outer guard portions 61 of the objective-lens mounting member 50 move in the axial direction to a position where they come out of the indentations 63e in the inner guard portions 63c. In this state, because the side faces of the outer guard portions 61 and the wall surfaces of the indentations 63e are disengaged from each other, the objective-lens mounting member 50 can be relatively rotated about the axial line with respect o the inner guard member 63, as indicated by the arrows in Fig. 15.

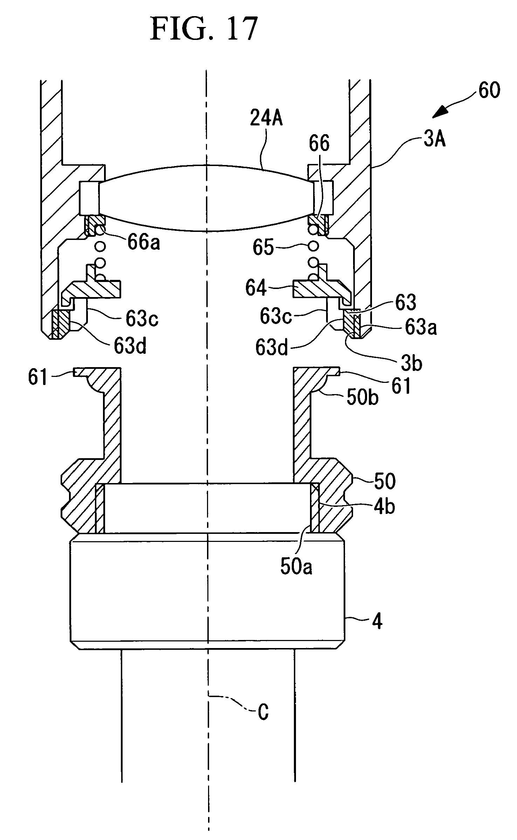

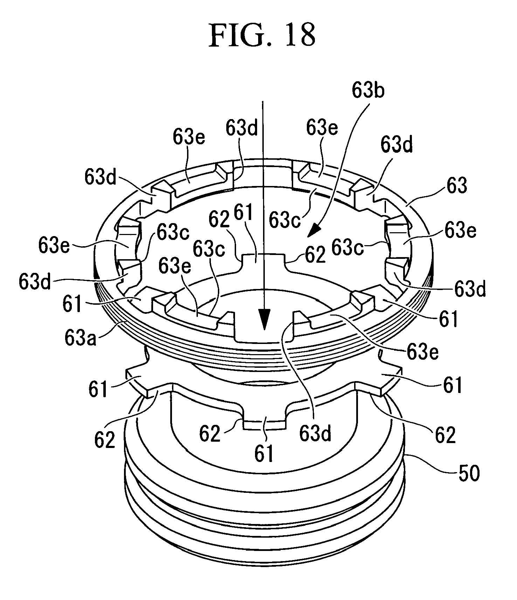

Then, by rotating the objective-lens mounting member 50 by a predetermined angle relative to the inner guard member 63, which in this embodiment is 30°, as shown in Fig. 16, the outer guard portions 61 become aligned with the notches 63d of the inner guard member 63 and the inner guard portions 63c become aligned with the notches 62 between the outer guard portions 61. Therefore, by moving the objective-lens mounting member 50 in the axial direction as indicated by the arrow, the guard portions 61 are extracted from the inner guard member 63, and it is possible to disengage the objective-lens mounting member 50 and the base member 3A, as shown in Figs. 17 and 18.

In other words, with the microscope examination apparatus 1A according to this embodiment, simply by rotating the objective-lens mounting member 50 by 30° about the axial line while it is slightly pushed in the axial direction relative to the base member 3A, it is possible to remove it from the base member 3A while keeping the objective lens unit 4 mounted to the objective-lens mounting member 50. The objective lens unit 4 can be attached to the base member 3A, while mounted to the objective-lens mounting member 50, simply by performing the above described procedure in reverse.

With the microscope examination apparatus 1A according to this embodiment, in an examination location where the working space is limited, it is not necessary to carry out an attaching procedure involving rotating the fine threaded mount 4b about the axis multiple times to engage it with the female threaded portion 50a. The objective lens unit 4 can be attached and detached in an extremely simple fashion, merely by pushing and rotating it by 30°. As a result, an advantage is afforded in that it is possible to drastically improve the efficiency of the procedure for replacing the objective lens unit 4.

The objective lens unit 4 can be removed from the objective-lens mounting member 50 by loosening the threaded mount 4b of the objective lens unit 4. Since this procedure can be carried out in a comparatively larger working space away from the examination site, there is less of a burden on the operator.

Next, a case in which an external force is applied to the tip 4a of the objective lens unit 4 at an angle with respect to the optical axis C will be described.

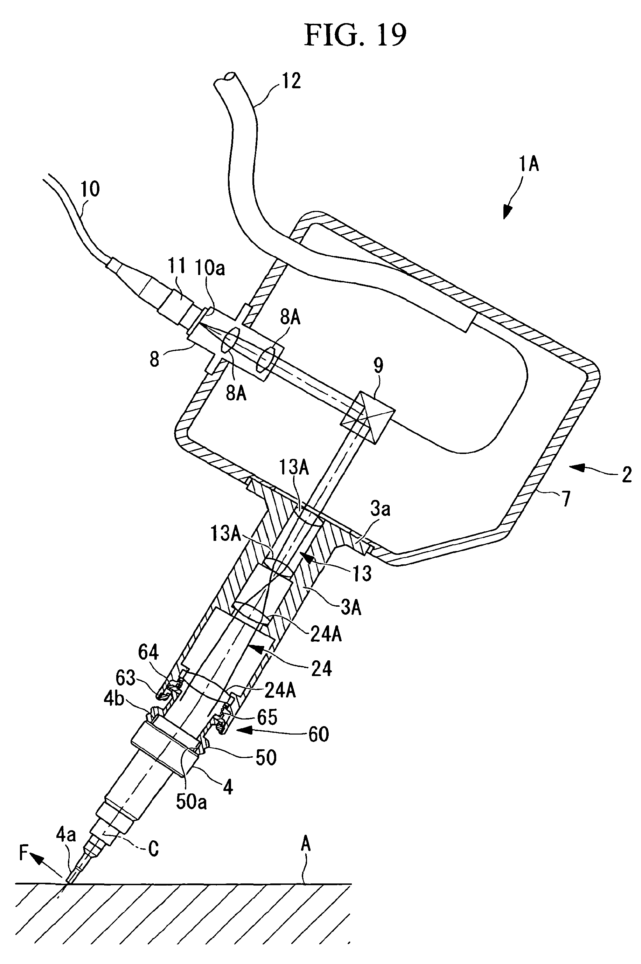

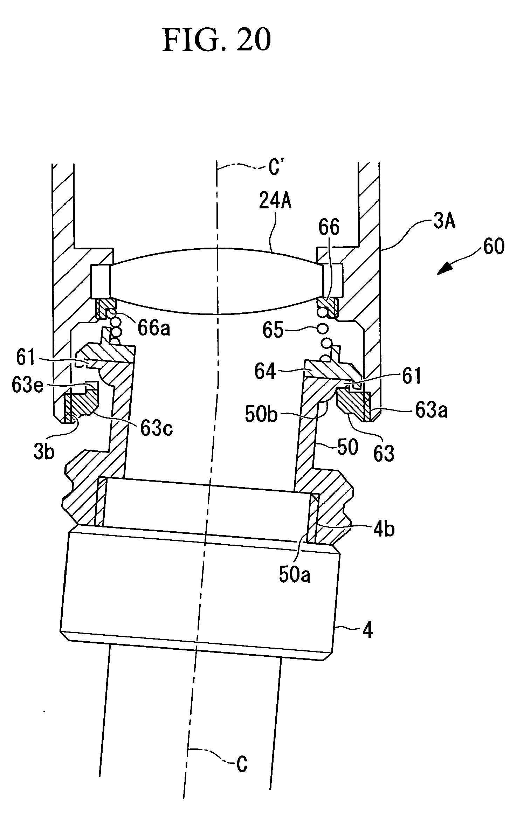

When an external force F is applied to the tip 4a of the objective lens unit 4 in a direction at an angle with respect to the optical axis C, as shown in Figs. 19 and 20, the coil spring 65 is compressed and the optical axis C of the objective lens unit 4 is rotated and moved relative to the optical axis of the base member 3A so that it becomes tilted.

Therefore, by moving the tip 4a of the objective lens unit 4 in the direction away from the external force F, it is possible to prevent an excessively large pressing force from being applied to the tip 4a, and it is thus possible to prevent damage to the objective lens unit 4 and the specimen A.

Then, when the external force exerted on the tip 4a of the objective lens unit 4 is removed, the support plate 64 is pushed back by the urging force of the coil spring 65, is guided by the guide surface 50b provided in the objective-lens mounting member 50 so that it fits in the central through-hole 63b in the inner guard member 63, and the objective lens unit 4 thus returns to a position where the optical axis C' of the base member 3A and the optical axis C of the objective lens unit 4 are aligned.

In the microscope examination apparatus 1A according to this embodiment, the inner guard member 63 is fixed to the base member 3A and the outer guard portions 61 are provided in the objective-lens mounting member 50; conversely, however, the outer guard portions 61 may be provided in the base member 3A and the inner guard member 63 may be provided in the objective-lens mounting member 50.

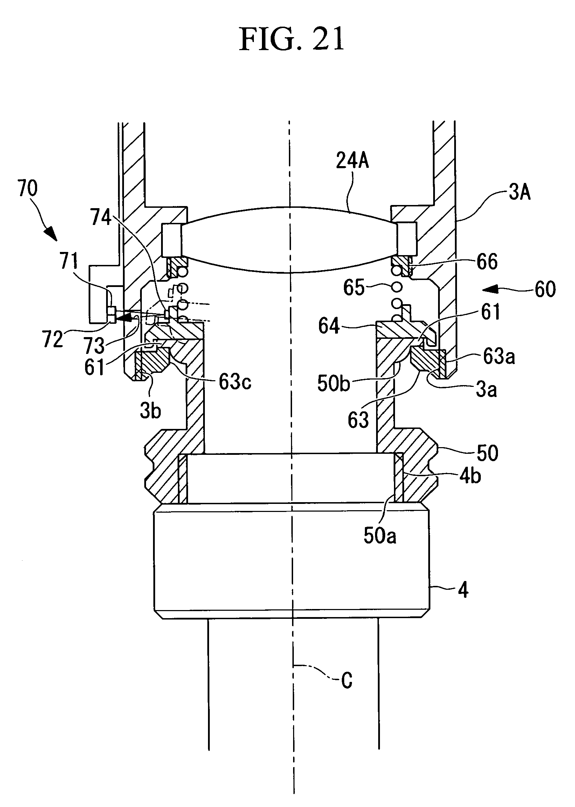

In the microscope examination apparatus 1A according to this embodiment, it is preferable to provide a detector 70 for detecting when the objective-lens mounting member 50 is shifted relative to the base member 3A. As shown in Fig. 21, the detector 70 may be formed, for example, of a light-emitting unit 71 and a light-receiving unit 72 disposed next to each other outside the base member 3A, a through-hole 73 disposed in the base member 3A so as to pass light from the light-emitting unit 71, and a mirror 74 fixed to the support plate 64.

In the state indicated by the solid lines in Fig. 21, where the objective-lens mounting member 50 is aligned and secured relative to the base member 3A, light emitted from the light-emitting unit 71 passes through the through-hole 73, is reflected by the mirror 74 provided on the support plate 64, passes through the through-hole 73 again, and is detected by the light-receiving unit 72. In the state indicated by the broken lines in Fig. 21, where the objective-lens mounting member 50 is shifted relative to the base member 3A, light emitted from the light-emitting unit 71 and passing through the through-hole 73 does not reach the mirror 74 and thus does not return to the light-receiving unit 72. Therefore, if the light is not detected by the light-receiving unit 72, it is possible to determine that the objective-lens mounting member 50 is displaced relative to the base member 3A.

By providing such a detector 70, it is possible to detect that the objective-lens mounting member 50 is displaced relative to the base member 3A, in other words, that an external force is exerted on the objective-lens unit 4. Therefore, by stopping the motion of the objective lens unit based on the detection signal or by loosening the objective lens unit 4 in a direction that lessens the external force, it is possible to protect the specimen A and the tip 4a of the objective lens unit 4 so that they are not damaged.

The detector 70 is not limited to the optical type described above; any other type of detector may be used, not just a micro switch.

In order for the detector 70 to detect tilting of the objective lens unit 4 in all directions with respect to the base member 3A, it is preferable to provide a plurality of them at intervals in the circumferential direction of the base member 3A.

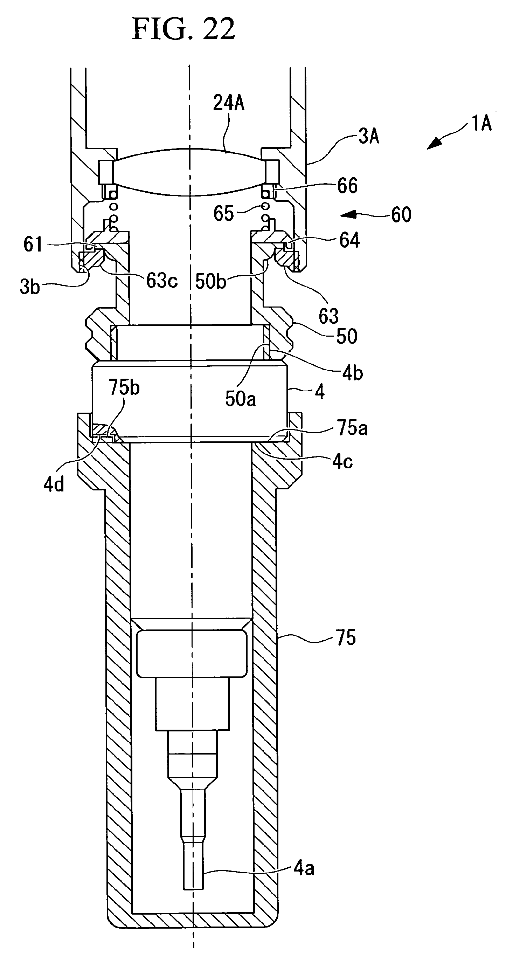

In the microscope examination apparatus 1A according to this embodiment, when the objective lens unit 4 is attached and detached, it is preferable to use a protector 75, as shown in Fig. 22. The protector 75 is formed in the shape of a substantially cylindrical tube that surrounds the objective lens unit 4 from the tip 4a side, and one end thereof is closed off. At the opening at the other end, an abutting surface 75a for abutting with a stepped portion 4c of the objective lens unit 4 is provided, and projections 75b for engaging with indentations 4d provided in the stepped portion 4c of the objective lens unit 4 are provided in the abutting surface 75a. A plurality of the projections 75b and indentations 4d are provided at intervals in the circumferential direction.

Accordingly, when the objective lens unit 4 is attached and detached, as shown in Fig. 22, the protector 75 is fitted to the objective lens unit 4, and the projections 75b in the abutting surface 75a are engaged with the indentations 4d in the stepped portion 4c of the objective lens unit 4. By doing so, relative rotation of the objective lens unit 4 and the protector 75 about the axial line is prevented. Therefore, by holding the protector 75 and rotating it while pushing the objective-lens mounting member 50 into the base member 3A, the operator can attach and detach the objective-lens unit 4 without directly touching the objective lens unit 4.

Therefore, it is possible to prevent contamination of the objective lens unit 4 due to the operator touching it with his hand, and the objective lens unit 4 can be attached while maintaining sterilized conditions.

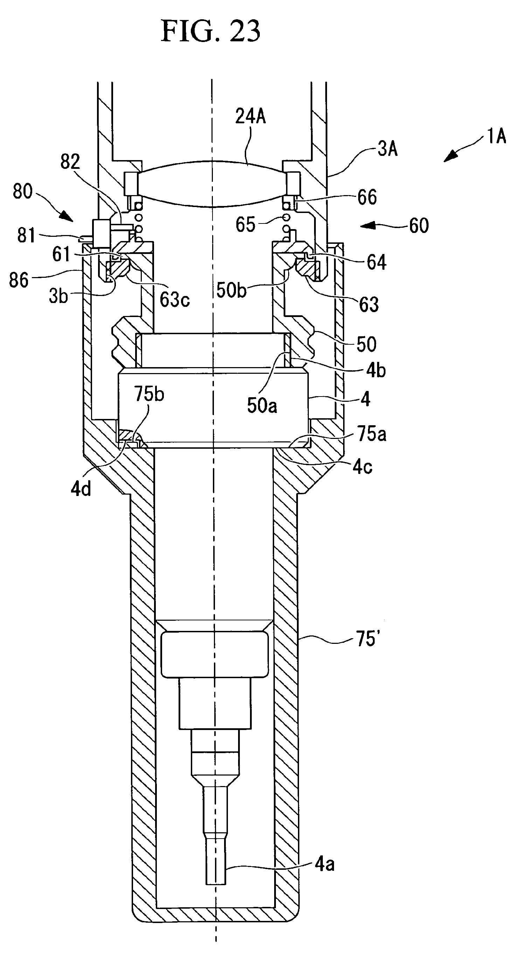

As shown in Figs. 23 to 24C, during examination, a mechanism 80 may be provided for preventing the objective lens unit 4 from accidentally falling off.

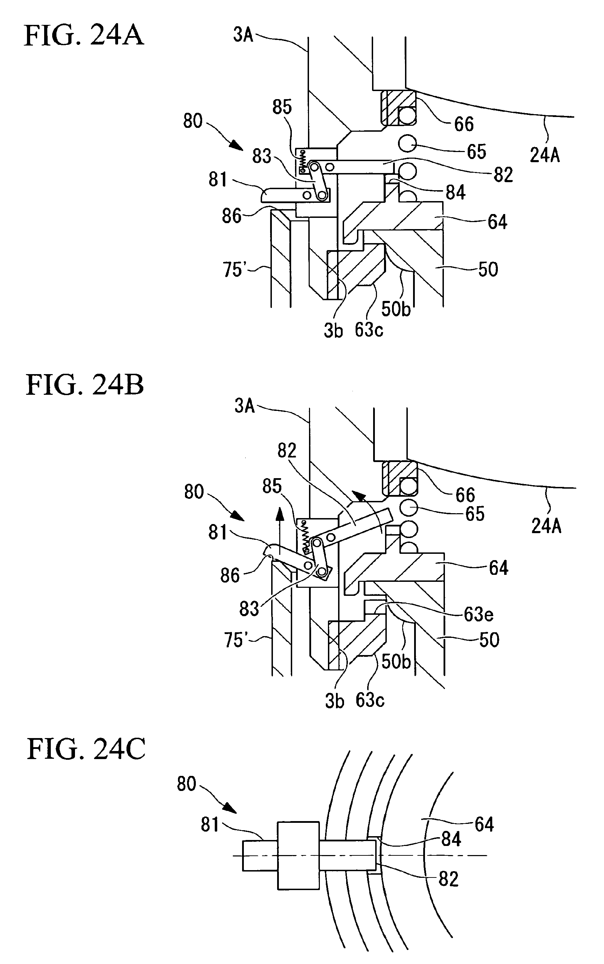

This mechanism 80 includes, for example, an outer link 81 and an inner link 82 which are attached so as to be capable of oscillating back and forth, an intermediate link 83 for coupling these links 81 and 82, and an engaging groove 84 which can engage with the end of the inner link 82; all of these components are provided at the end of the base member 3A. The outer link 81 and the inner link 82 are urged in the state shown in Fig. 24A by a spring 85.

With this configuration, during examination, the end of the inner link 82 is disposed close to the engaging groove 84 in the support plate 64, as shown in Fig. 24A. Therefore, even when the coil spring 65 is compressed by pressing the tip 4a of the objective lens unit 4 and the support plate 64 moves in the axial direction, as shown in Fig. 24C, because the inner link 82 is engaged with the engaging groove 84, the support plate 64 is prevented from rotating about the axis. As a result, the objective lens unit 4, which is in contact with the support plate 64, is also difficult to rotate, and it is possible to prevent it from disengaging from the inner guard member 63.

On the other hand, when attaching or detaching the objective lens unit 4 to or from the base member 3A, as shown for example in Fig. 23, using a protector 75' including a pressing portion 86 that extends in the axial direction in an opening thereof, as shown in Fig. 24B, the external link 81 is pressed by the pressing portion 86 of the protector 75'. Accordingly, the inner link 82 swings upwards away from the engaging groove 84, thus allowing the support plate 64 to rotate. With this configuration, it is possible to easily rotate the objective lens unit 4 together with the support plate 64, and it is thus possible to easily disengage it from the inner guard member 63.

### Third Embodiment

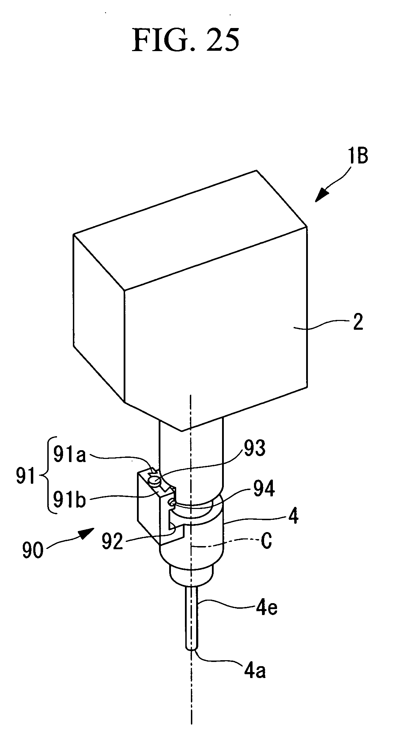

An optical apparatus 1B according to a third embodiment of the present invention will be described below with reference to Figs. 25 to 28.

The optical apparatus 1B according to this embodiment, which is a microscope examination apparatus (hereinafter referred to as microscope examination apparatus 1B), includes an apparatus (microscope) main body 2, an objective lens unit 4, and an objective-lens mounting mechanism 90.

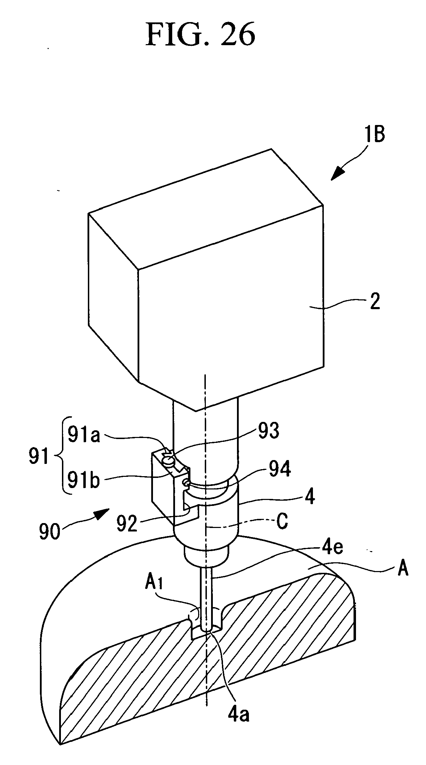

Although not shown in the drawings, an optical fiber for guiding excitation light from a light source device is connected to the apparatus main body 2. Inside the apparatus main body 2, there are a collimator unit for collecting excitation light emitted from the optical fiber and converting it to a substantially collimated beam; an optical scanning unit for two-dimensionally scanning the substantially collimated excitation light; a pupil-projection lens unit for focusing the excitation light scanned by the optical scanning unit to form an intermediate image; and an image-forming lens unit for collecting the excitation light forming the intermediate image and turning it into a substantially collimated beam. Outside the apparatus main body 2, there is an optical detector for detecting fluorescence from a specimen A (see Fig. 26), which is collected through the objective lens unit 4, and the optical detector is connected to the apparatus main body 2 via an optical fiber. In addition, a monitor is provided for displaying a fluorescence image constructed on the basis of the fluorescence detected by the optical detector.

Accordingly, the excitation light transmitted from the light source device is two-dimensionally scanned and introduced to the objective lens unit 4; the two-dimensionally scanned excitation light is then emitted from the tip 4a of the objective lens unit 4. The fluorescence from the specimen A, which is collected via the objective lens unit 4, is detected by the optical detector, and a fluorescence image is displayed on the monitor.

The apparatus main body is attached to an arm provided with a focusing unit (not shown). By operating the focusing unit, it is possible to fix the apparatus main body 2 at a desired position and orientation within an adjustable range.

The objective lens unit 4 includes a small-diameter end portion 4e whose tip 4a can be inserted inside the body of a living organism, serving as the specimen A, with minimal invasiveness.

The objective-lens mounting mechanism 90 includes an objective-lens advancing-and-retracting mechanism 91 for advancing and retracting the tip 4a of the objective lens unit 4 in the direction of the optical axis C thereof, and an attaching-and-detaching mechanism 92 for attaching and detaching the objective lens unit 4 to and from the apparatus main body 2 when the tip 4a of the objective lens unit 4 is retracted in the direction of the optical axis C.

The objective-lens advancing-and-retracting mechanism 91 includes a dovetail tenon 91a fixed to the apparatus main body 2 and a dovetail groove 91b fixed to the objective lens unit 4. Provided in the dovetail groove 91b are a stopper 93 and a plunger 94. The stopper 93 abuts against the end face of the dovetail tenon 91a when the tip 4a of the objective lens unit 4 is fully forward, and the plunger 94 presses against the outer surface of the dovetail tenon 91a at the inner surface of the dovetail groove 91b to prevent positional shifting of the dovetail groove 91b and the dovetail tenon 91a due to a gap when fitting them together.

The dovetail groove 91b extends substantially parallel to the optical axis C and guides the dovetail tenon 91a, which is fitted with the dovetail groove 91b, in the direction of the optical axis C along the dovetail groove 91b. The distance that the dovetail groove 91b can move along the dovetail tenon 91a is set to be longer than the insertion depth of the objective lens unit 4 inside an indentation A₁ in the specimen A.

The attaching-and-detaching mechanism 92 is formed of a notch (hereinafter referred to as notch 92) provided in the dovetail groove 91b at the tip 4a side of the objective lens unit 4. When the dovetail tenon 91a, which is engaged with the dovetail groove. 91b, moves along the dovetail groove 91b to the tip 4a side of the objective lens unit 4, it disengages from the dovetail groove 91b at a position where it is aligned with the notch 92 provided at the tip side of the dovetail groove 91b, which allows the objective lens unit 4 to be removed from the apparatus main body 2 in a direction perpendicular to the optical axis C.

The operation of the microscope examination apparatus 1B according to this embodiment, having such a configuration, will be described below.

To examine the specimen A with the microscope examination apparatus 1B according this embodiment, the objective lens unit 4, which has a low magnification, is attached to the apparatus main body 2 with the objective-lens mounting mechanism 90, the focusing unit is operated to advance the objective lens unit 4 in the direction of the optical axis C, and as shown in Fig. 26, the tip 4a of the objective lens unit 4 is inserted in the indentation A₁ in the specimen A (shown in cross section) ready for examination.

In this state, by supplying excitation light from the light source device, the excitation light is two-dimensionally scanned inside the apparatus main body 2 and is emitted from the tip 4a of the objective lens unit 4 towards the specimen A. Due to irradiation with the excitation light, fluorescent material in the specimen A is excited and generates fluorescence. The fluorescence generated is collected by the objective lens unit 4, returns along the reverse path, is detected by the optical detector, and is displayed on the monitor. The operator operates the focusing unit while looking at the monitor display to align the center of the objective lens unit 4 with the site to be examined and fixes the focusing unit in this state.

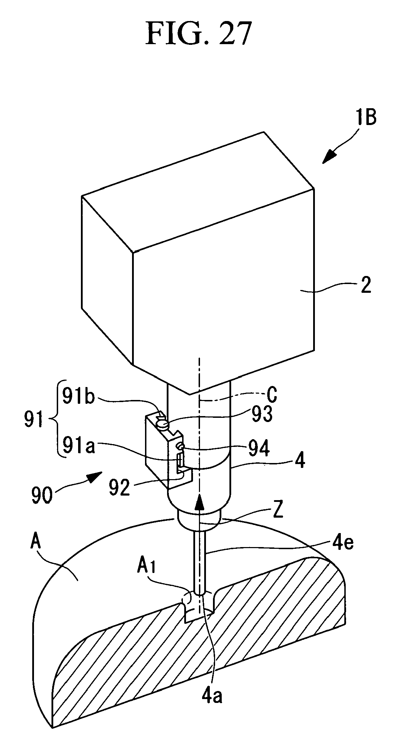

To carry out examination with a higher magnification, the objective-lens mounting mechanism 90 is operated while keeping the focusing unit fixed. More specifically, as indicated by the arrow Z in Fig. 27, the dovetail groove 91b provided on the objective lens unit 4 is moved along the optical axis C relative to the dovetail tenon 91a provided in the apparatus main body 2. By doing so, the tip 4a of the objective lens unit 4 is retracted from the indentation A₁ in the specimen A in the direction of the optical axis C.

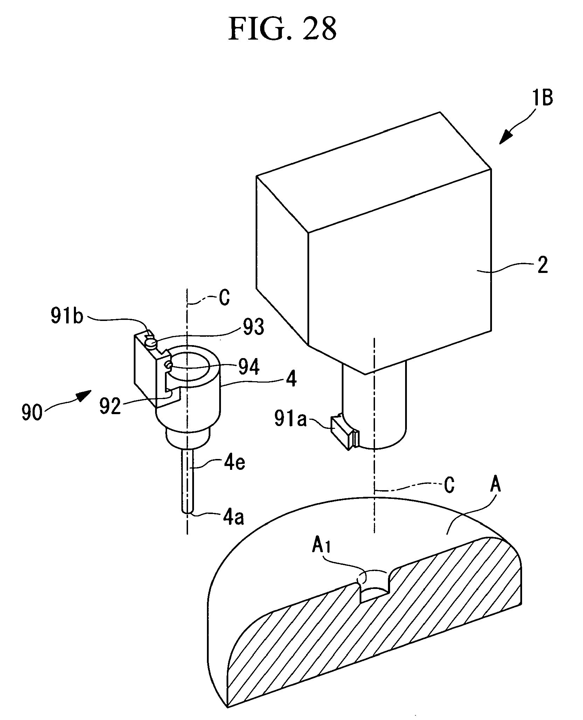

Then, when the dovetail groove 91b has moved by a predetermined distance relative to the dovetail tenon 91a so that the notch 92 provided in the dovetail groove 91b is aligned with the dovetail tenon 91a, the dovetail groove 91b and the dovetail tenon 91a are disengaged. Therefore, it is possible to move the dovetail groove 92b relative to the dovetail tenon 91a in the direction perpendicular to the optical axis C. Accordingly, as shown in Fig. 28, the objective lens unit 4 whose tip 4a has been removed from the indentation A₁ in the specimen A can be moved in a direction perpendicular to the optical axis C, and it is thus possible to easily remove the objective lens unit 4 from the apparatus main body 2.

Next, a high-magnification objective lens unit 4 is prepared, the notch 92 in the dovetail groove 91b provided in this objective lens unit 4 is positioned at the dovetail tenon 91a in the apparatus main body 2 to align the optical axis C of the objective lens unit 4 and the optical axis C of the apparatus main body 2. In this state, by advancing the dovetail groove 91b relative to the dovetail tenon 91a in the direction of the optical axis C, the dovetail tenon 91a and the dovetail groove 91b are engaged, and it is possible to insert the tip 4a of the objective lens unit 4 in the indentation A₁ in the specimen A. Then, by advancing the objective lens unit 4 to a position where the stopper 93 provided in the dovetail groove 91b abuts against the end face of the dovetail tenon 91a, the tip 4a of the high-magnification objective lens unit 4 can be located at the same position as the tip 4a of the low-magnification objective lens unit 4 before it was replaced.

Thus, the microscope examination apparatus 1B according to this embodiment provides an advantage in that the efficiency of this operation is improved, because part of the procedure for attaching and removing the objective lens unit 4 is combined with the attachment and removal of the objective lens unit 4 from the indentation A₁ in the specimen A. Also, because a complex mechanism is not necessary, it is possible to provide a product that occupies less space and that has reduced costs.

This embodiment has been illustrated by a microscope examination apparatus 1B as the optical apparatus; instead of this, however, any type of optical apparatus using the objective lens unit 4 may be employed. Furthermore, the attaching-and-detaching mechanism 92 of the objective lens unit 4 may restrain decentering or defocusing of the objective lens unit 4, and is not limited to the structure of this embodiment. Moreover, although the dovetail tenon 91a is provided on the apparatus main body 2 and the dovetail groove 91b is provided on the objective lens unit 4, instead of this, the dovetail groove 91b may be provided on the apparatus main body 2 and the dovetail tenon 91a may be provided on the objective lens unit 4. When a conventional objective lens unit is used as the objective lens unit 4, it may be used with the microscope examination apparatus by providing a mounting adaptor with an RMS thread.

Although this embodiment has been illustrated by an apparatus in which a gap is formed between the apparatus main body 2 and the objective lens unit 4, instead of this, a light-shielding member for covering the gap may be used if the gap acts as an obstruction to examination. Fourth Embodiment

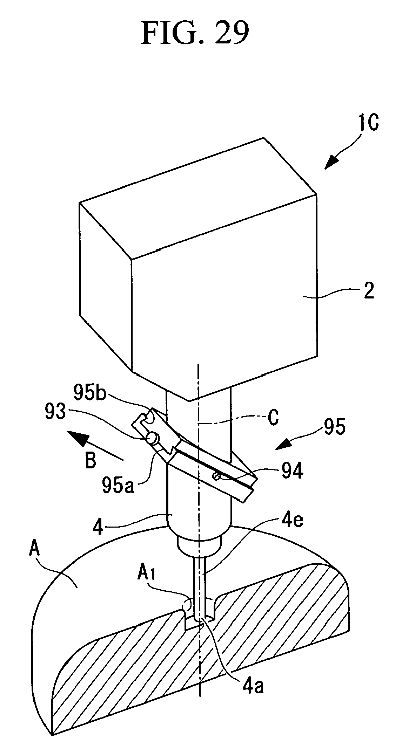

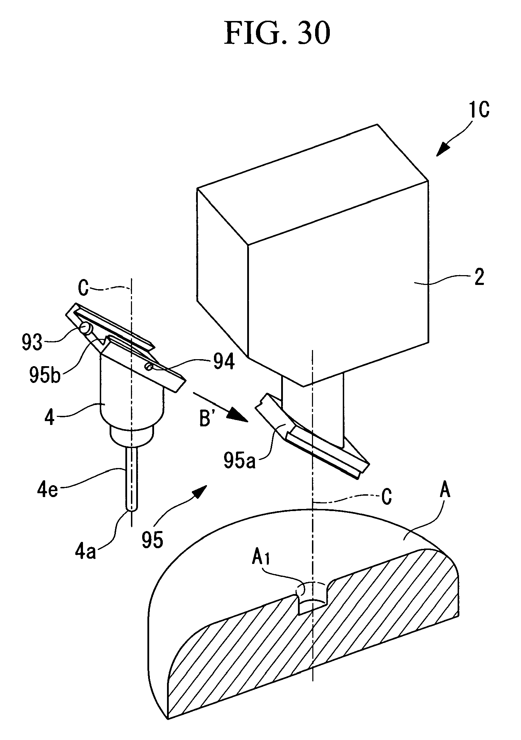

Next, a microscope examination apparatus 1C according to a fourth embodiment of the present invention will be described below with reference to Figs. 29 and 30.

In the description of this embodiment, parts having the same configuration as those in the microscope examination apparatus 1B according to the third embodiment described above are assigned the same reference numerals, and a description thereof is thus omitted here.

As shown in Fig. 29, the microscope examination apparatus 1C according to this embodiment includes an objective-lens mounting mechanism 95 formed of a dovetail tenon 95a and a dovetail groove 95b. However, unlike the third embodiment, the dovetail tenon 95a provided on the apparatus main body 2 is disposed in a direction that intersects the optical axis C at an angle. Also, the dovetail groove 95b provided on the objective lens unit 4 is disposed in a direction that intersects the optical axis C of the objective lens unit 4 at an angle. Thus, the dovetail tenon 95a and the dovetail groove 95b simultaneously form an objective-lens advancing-and-retracting mechanism and an attaching-and-detaching mechanism.

The operation of the microscope examination apparatus 1C according to this embodiment, having such configuration, will be described below.

To perform examination inside the indentation A₁ provided in the specimen A using the microscope examination apparatus 1C according to this embodiment, as shown in Fig. 29, the dovetail groove 95b on the objective lens unit 4 is engaged with the dovetail tenon 95a provided on the apparatus main body 2 and is advanced to a position where a stopper 93 provided in the dovetail groove 95b abuts against an end face of the dovetail tenon 95a. Thus, the optical axis C of the apparatus main body 2 and the optical axis C of the objective lens unit 4 are fixed at a positions where they are aligned in a straight line. The dovetail tenon 95a and the dovetail groove 95b are pressed together with a plunger 94 so that no gap occurs and there is no positional shift.

In this state, when the objective lens unit 4 is exchanged with another one having a different magnification, the objective lens unit 4 is moved as indicated by the arrow B in Fig. 29. In other words, by moving the dovetail groove 95b along the dovetail tenon 95a, the objective lens unit 4 is moved backwards in a direction which retracts the tip 4a thereof from the indentation A₁ in the specimen A, while at the same time moving it in a direction that intersect the optical axis C at an angle. By setting the tilt angle of the dovetail tenon 95a and the dovetail groove 95b with respect to the optical axis C to a sufficiently small angle, it is possible to make sure that the tip 4a of the objective lens unit 4 does not interfere with the specimen A when retracting the tip 4a of the objective lens unit 4 from the indentation A₁ in the specimen A. Then, after moving it by a predetermined distance, the dovetail tenon 95a and the dovetail groove 95 become disengaged, and the objective lens unit 4 is separated from the apparatus main body 2.

Subsequently, the dovetail groove 95b of an objective lens unit 4 having a different magnification is engaged with the dovetail tenon 95a on the apparatus main body 2, and by moving it along the dovetail tenon 95a at an angle with respect to the optical axis C, that is, in the direction indicated by arrow B' , until the stopper 93 abuts against the end face of the dovetail tenon 95a, it is located at a position where the optical axis C of the objective lens unit 4 and the optical axis C of the apparatus main body 2 are aligned. At this position, the tip 4a of the objective lens unit 4 can be inserted into the indentation A₁ in the specimen A.

Thus, with the microscope examination apparatus 1C according to this embodiment, it is possible to attach and detach the objective lens unit 4 to and from the apparatus main body 2 simply by moving the dovetail groove 95b along the dovetail tenon 95a, and it is also possible to advance and retract the tip 4a of the objective lens unit 4 into and from the indentation A₁ in the specimen A. Therefore, when removing the objective lens unit 4, the objective lens unit 4 can be extracted from the indentation A₁ in the specimen A and removed from the apparatus main body 2 with a simple operation. Furthermore, when attaching the objective lens unit 4, it can be attached to the apparatus main body 2 with a simple operation, and it is also possible to easily insert the tip 4a of the objective lens unit 4 in the indentation A₁ in the specimen A.

In this case, it is not necessary to provide a lot of space around the objective lens unit 4 for exchanging it, thus reducing the amount of space required. In addition, by abutting the stopper 93 against the dovetail tenon 95a when replacing the objective lens unit 4, it is possible to position it in alignment with the optical axis C with a high degree of reproducibility, which affords an advantage in that the target position on the specimen A is not lost, even when changing to a high magnification.

Furthermore, with the microscope examination apparatus 1C according to this embodiment, because no gap is formed between the apparatus main body 2 and the objective lens unit 4 by the objective-lens mounting mechanism 95 provided on the apparatus main body 2 and the objective lens unit 4, an advantage is provided in that the excitation light does not leak out.

### Fifth Embodiment

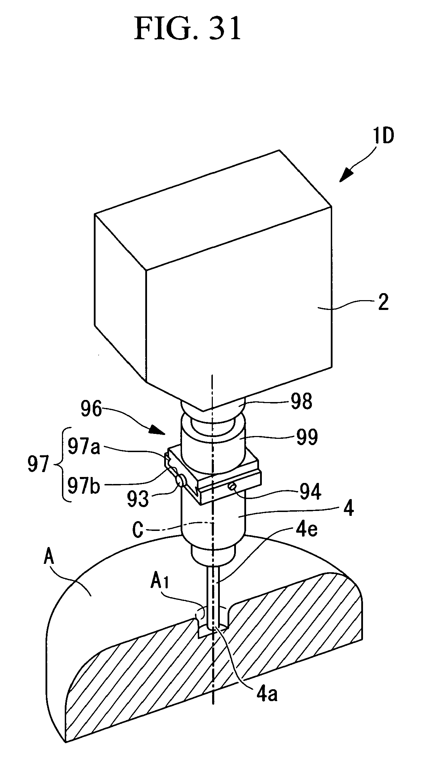

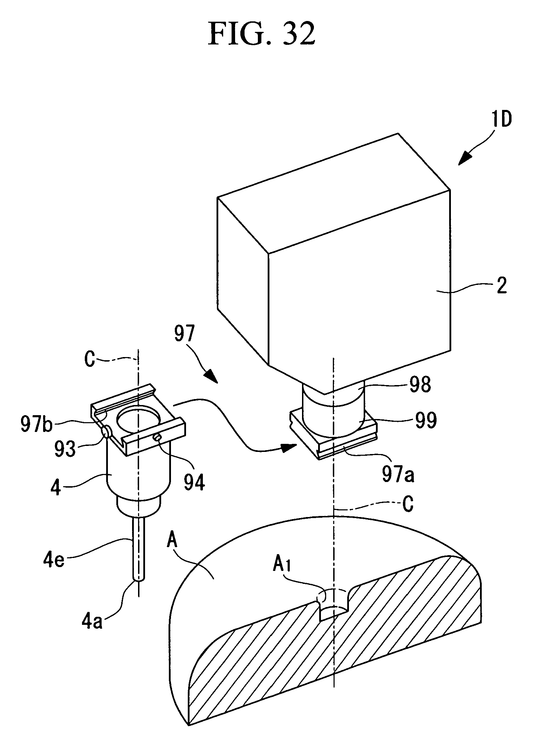

Next, a microscope examination apparatus 1D according to a fifth embodiment of the present invention will be described below with reference to Figs. 31 and 32.

In the description of this embodiment, parts having the same configuration as those in the microscope examination apparatus 1B according to the third embodiment described above are assigned the same reference numerals, and a description thereof is thus omitted here.

The microscope examination apparatus 1D according to this embodiment includes a telescopic mechanism 96 provided on the apparatus main body 2, and an attaching-and-detaching mechanism 97 for attaching and detaching the objective lens unit 4 to and from the apparatus main body 2.

The telescopic mechanism 96 includes a tube member 99 provided in a lens barrel 98, which is provided on the apparatus main body 2, so as to be capable of moving in the direction of the optical axis C, and a spring (not shown in the drawing), sandwiched between the tube member 99 and the lens barrel 98, for constantly urging the tube member 99 forward in the direction of the optical axis C relative to the lens barrel 98.

The attaching-and-detaching mechanism 97 is formed of a dovetail tenon 97a provided at the front end of the tube member 99 and extending in a direction orthogonal to the optical axis C, and a dovetail groove 97b, provided at the rear end of the objective lens unit 4, for engaging with the dovetail tenon 97a.

With the microscope examination apparatus 1D according to this embodiment, having such a configuration, the dovetail groove 97b of the objective lens unit 4 is engaged with the dovetail tenon 97a in the apparatus main body 2, and is located at a position where a stopper 93 in the dovetail groove 97b abuts against the end face of the dovetail tenon 97a. This allows them to be fixed such that the optical axis C of the lens barrel 98 on the apparatus main body 2 and the optical axis C of the objective lens unit 4 are positioned in a straight line.

Because the telescopic mechanism 96 urges the objective lens unit 4 forward with the spring, the tip 4a of the objective lens unit 4 can be kept in the forwardmost position while released. By operating the focusing unit in this state, the tip 4a of the objective lens unit 4 can be inserted inside the indentation A₁ in the specimen A, and examination of the interior of the indentation A₁ can be carried out.

Then, when replacing the objective lens unit 4 for another one having a different magnification, the tube member 99 is pulled back relative to the lens barrel 98 on the apparatus main body 2 against the urging force of the spring. Accordingly, because it is located at a position where the tip 4a of the objective lens unit 4 is extracted from the indentation A₁ in the specimen A, operating the attaching-and-detaching mechanism 97 allows the objective lens unit 4 to be removed from the apparatus main body 2. More specifically, the dovetail groove 97b on the objective lens unit 4 is moved horizontally with respect to the dovetail tenon 97b on the apparatus main body 2. Because the tip 4a of the objective lens unit 4 is extracted from the indentation A₁ in the specimen A by operating the telescopic mechanism 96, the tip 4a of the objective lens unit 4 can be moved without interfering with the specimen A, even though the objective lens unit 4 is moved horizontally. Therefore, it is possible to easily remove the objective lens unit 4.

When attaching the objective lens unit 4, the dovetail groove 97b of the new objective lens unit 4 is engaged with the dovetail tenon 97a on the tube member 96 while keeping the telescopic mechanism 96 in the collapsed state. Then, the optical axis C of the apparatus main body 2 and the optical axis C of the objective lens unit 4 are aligned by horizontally moving the dovetail groove 97b horizontally along the dovetail tenon 97a until the stopper 93 can move no further. When releasing the telescopic mechanism 96 in this state, the objective lens unit 4 is pushed forward by the urging force of the spring, and the tip 4a thereof is inserted in the indentation A₁ of the specimen A. In this case too, the tip 4a of the objective lens unit 4 can be inserted in the indentation A₁ without interfering with the specimen A. It is possible to position the tip 4a of the objective lens unit 4 after replacement at the same position as that of the tip 4a of the objective lens unit 4 prior to replacement, and it is possible to carry out examination with a different magnification without losing the examination target.

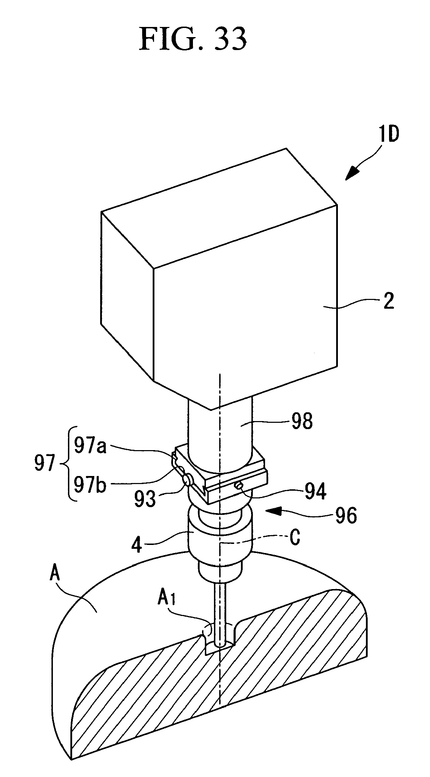

In this embodiment, although the telescopic mechanism 96 is provided on the apparatus main body 2, it may be provided on the objective lens unit 4 instead, as shown in Fig. 33.

The telescopic mechanism 96 may be a mechanism that is always in the extended state except when attaching or detaching the objective lens unit, when it is held in the collapsed state by manually compressing the spring. Alternatively, it may include a holding mechanism (not shown) for holding it in the collapsed state and a releasing mechanism for releasing it from this state.

This embodiment is not limited to the microscope examination apparatus 1D; it may be an optical apparatus using the objective lens unit 4. Also, the attaching-and-detaching mechanism 97 of the objective lens unit 4 is not limited to the configuration described above, so long as it reduces decentering and defocusing of the objective lens unit 4. Furthermore, the telescopic mechanism 96 is not limited to a mechanism employing a spring; it may be a rotary mechanism or the like using a cam groove.

### Sixth Embodiment

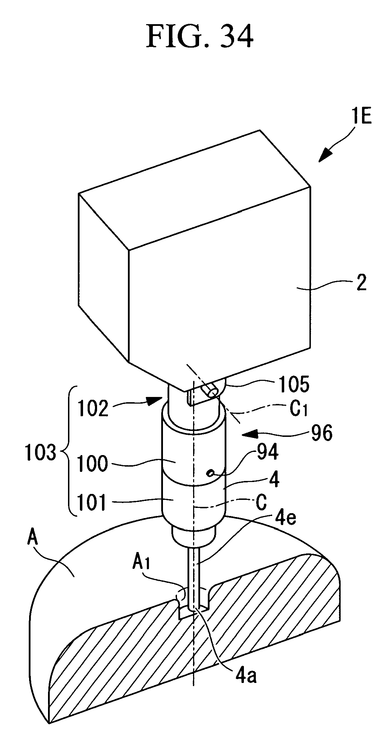

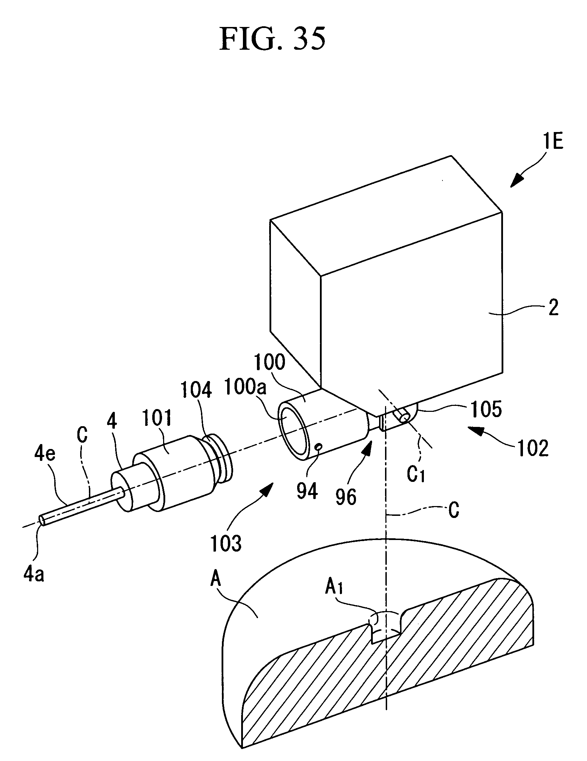

Next, a microscope examination apparatus 1E according to a sixth embodiment of the present invention will be described below with reference to Figs. 34 and 35.

In the description of this embodiment, parts having the same configuration as those in the microscope examination apparatus 1D according to the fifth embodiment described above are assigned the same reference numerals, and a description thereof is thus omitted here.

Whereas the microscope examination apparatus 1D according to the fifth embodiment includes a dovetail tenon 97a and a dovetail groove 97b at the attaching-and-detaching mechanism 97, the microscope examination apparatus 1E according to this embodiment includes an attaching-and-detaching mechanism 103 formed of a tubular portion 100, a fitting shaft 101, and a swinging mechanism 102. The tubular portion 100, is provide on the apparatus main body 2 and includes a fitting hole 100a. The fitting shaft 101 is provide on the objective lens unit 4 and fits into the fitting hole 100a of the tubular portion 100. The swinging mechanism 102 supports the tubular portion 100 in such a manner as to enable it to swing relative to the apparatus main body 2 about an axis C₁ perpendicular to the optical axis C.

A plunger 94 that can protrude in the inner radial direction is provided in the tubular member 100. As shown in Fig. 35, a V-shaped channel 104 for keeping the objective lens unit 4 engaged with the tubular portion 100, by engagement with the plunger 94, is provided at a position of the fitting shaft 101 corresponding to the plunger 94.

The swinging mechanism 102 supports the tubular portion 100 in such manner as to allow it to swing relative to a bracket 105 provided on the apparatus main body 2. Also, a telescopic mechanism 96 like that in the fifth embodiment is provided in the tubular portion 100.

With the microscope examination apparatus 1E according to this embodiment, having such a configuration, the objective lens unit 4 is kept attached to the tubular portion 100 by fitting the fitting shaft 101 into the fitting hole 100a in the tubular portion 100 and engaging the plunger 94 with the V-shaped groove 104. As shown in Fig. 34, the tubular portion 100 is swung with respect to the bracket 105 to position the optical axis C of the apparatus main body 2 and the optical axis C of the objective lens unit 4 on a straight line. Then, the telescopic mechanism 96 is released, causing it to extend, and in this state, the focusing unit is operated to insert the tip 4a of the objective lens unit 4 inside the indentation A₁ of the specimen A. Therefore, it is possible to carry out examination inside the indentation A₁.

Then, when replacing the objective lens unit 4 with another objective lens unit 4 having a different magnification, by compressing the telescopic mechanism 96 provided on the tubular portion 100 to collapse it, the tip 4a of the objective lens unit 4 is retracted against the urging force of the spring. Thus, the tip 4a of the objective lens unit 4 is extracted from the indentation A₁ in the specimen A.

Operating the swinging mechanism 102 in this state causes the tubular portion 100 and the objective lens unit 4 to swing relative to the bracket 105. Because the tubular portion 100 is supported in the bracket 105 so as to be rotatable about the axis C₁ perpendicular to the optical axis C, the objective lens unit 4 can be made to swing about the axis C₁ perpendicular to the optical axis C, which causes the tip 4a to move in a direction away from the specimen A, as shown in Fig. 35. The objective lens unit 4 is then removed from the apparatus main body 2 by disengaging the fitting shaft 101 and the fitting hole 100a in the tubular portion 100.

Then, another objective lens unit 4 having a different magnification is attached by the reverse procedure: that is, the fitting shaft 101 of the objective lens unit 4 is fitted to the fitting hole 100a in the tubular portion 100, and the tubular portion 100 is swung with respect to the bracket 105. Once the optical axis C of the apparatus main body 2 and the optical axis C of the objective lens unit 4 are positioned in a straight line, the telescopic mechanism 96 is extended, thus inserting the tip 4a of the objective lens unit 4 in the indentation A₁ in the specimen A. Therefore, the tip 4a of the objective lens unit 4 can be located at the same position of the tip 4a of the objective lens unit 4 before replacement.

With the microscope examination apparatus 1E according to this embodiment, the configuration of the attaching-and-detaching mechanism 103 can be made extremely simple; that is, the fitting shaft 101 on the objective lens unit 4 is merely fitted to the fitting hole 100a in the tubular portion 100. Therefore, an advantage is afforded in that it is possible to reduce the space around the objective lens unit 4 and it is possible to ensure a large space around the specimen A during examination.

## Claims

1. A microscope examination apparatus comprising:
an apparatus main body;
a base member secured to the apparatus main body;
an objective-lens mounting member for mounting an objective lens unit; and
a support mechanism for supporting the objective-lens mounting member in such a manner as to enable movement thereof relative to the base member in a direction intersecting an optical axis of the objective lens unit.

2. A microscope examination apparatus according to Claim 1, wherein:
the support mechanism has a spherical surface provided on one of the base member and the objective-lens mounting member and an inner spherical surface provided on the other one of the base member and the objective-lens mounting member and having a shape that is complementary to the spherical surface, and
the support mechanism includes an urging member for keeping the spherical surface and the inner spherical surface in contact.

3. A microscope examination apparatus according to Claim 2, wherein:
a ball plunger is provided in one of the base member and the objective-lens mounting member, the ball plunger being formed of a guide hole extending in a radial direction from the spherical surface or the inner spherical surface, a ball which is accommodated in the guide hole so as to be capable of coming in and out, and a spring for urging the ball in a direction that causes the ball to protrude from an opening of the guide hole; and
an indentation is provided in the other one of the base member and the objective-lens mounting member, the indentation engaging with the ball of the ball plunger when a center axis of the base member and a center axis of the objective-lens mounting member are aligned.

4. A microscope examination apparatus according to Claim 1, wherein:
the support mechanism has a cylindrical surface provide in one of the base member and the objective-lens mounting member and an inner cylindrical surface provided in the other one of the base member and the objective-lens mounting member and having a shape that is complementary to the cylindrical surface,
and the support mechanism includes an urging member for keeping the cylindrical surface and the inner cylindrical surface in contact.

5. A microscope examination apparatus according to Claim 4, wherein the cylindrical surface and the inner cylindrical surface have central axes that are parallel to a rotation shaft for changing the orientation of the apparatus main body.

6. A microscope examination apparatus according to Claim 4, wherein:
a ball plunger is provided in one of the base member and the objective-lens mounting member, the ball plunger being formed of a guide hole extending in a radial direction from the cylindrical surface or the inner cylindrical surface, a ball which is accommodated in the guide hole so as to be capable of coming in and out, and a spring for urging the ball in a direction that causes the ball to protrude from an opening of the guide hole; and
an indentation is provided in the other one of the base member and the objective-lens mounting member, the indentation engaging with the ball of the plunger when a central axis of the base member and a central axis of the objective-lens mounting member are aligned.

7. A microscope examination apparatus according to Claim 2, wherein the urging member is formed of springs disposed at both sides in the movement direction of the objective-lens mounting member with respect to the base member, so as to flank the optical axis of the objective lens unit.

8. A microscope examination apparatus according to Claim 4, wherein the urging member is formed of spring disposed at both sides in the movement direction of the objective-lens mounting member with respect to the base member, so as to flank the optical axis of the objective lens unit.

9. A microscope examination apparatus according to Claim 1, wherein:
the support mechanism couples the base member and the objective-lens mounting member and includes a flexible member which bends when a predetermined external force or above is exerted on the objective-lens mounting member in a direction intersecting an optical axis of an objective lens.

10. A microscope examination apparatus according to Claim 1, further comprising a sensor for detecting displacement between the base member and the objective-lens mounting member.

11. A microscope examination apparatus according to Claim 1, wherein:
the support mechanism has an inner guard portion provided in one of the base member and the objective-lens mounting member so as to project inward in the radial direction and an outer guard portion provided in the other one of the base member and the objective-lens mounting member so as to project outward in the radial direction, and the support mechanism includes an urging member for axially urging the inner guard portion and the outer guard portion in directions that cause contact therebetween; and
notches are provided in the inner guard portion and the outer guard portion for disengagement thereof in the axial direction when the inner guard portion and the outer guard portion are disposed at predetermined relative rotational angles about the optical axis.

12. A microscope examination apparatus according to Claim 11, wherein a locking mechanism is provided in the inner guard portion and the outer guard portion for preventing relative rotation about the optical axis when the inner guard portion and the outer guard portion are engaged in the axial direction.

13. A microscope examination apparatus according to Claim 11, wherein a guide mechanism is provide in the inner guard portion and the outer guard portion for guiding thereof to align center axes of the objective lens unit and the base member are aligned when the inner guard portion and the outer guard portion are engaged in the axial direction.

14. A microscope examination apparatus according to Claim 11 wherein a detector is provided in the support mechanism for detecting relative motion of the objective-lens mounting member with respect to the base member.

15. A microscope examination apparatus according to Claim 1, further comprising:
an objective-lens mounting mechanism for mounting an objective lens in such a manner as to enable attachment to and detachment from the apparatus main body,
wherein the objective-lens mounting mechanism includes
an objective-lens advancing-and-retracting mechanism for advancing and retracting a tip of the objective lens in the optical axis direction, and
an attaching-and-detaching mechanism for attaching and detaching the objective lens to and from the apparatus main body when the tip of the objective lens is retracted in the optical axis direction.

16. A microscope examination apparatus according to claim 15, wherein the objective-lens advancing-and-retracting mechanism is formed of a telescopic mechanism provided on one of the apparatus main body and the objective lens.

17. A microscope examination apparatus according to Claim 15, further comprising:
a rotating mechanism, at the rear end of the objective lens, for rotating the objective lens about an axis substantially perpendicular to the optical axis direction once the tip of the objective lens is retracted in the optical axis direction by the objective-lens advancing-and-retracting mechanism.

18. A microscope examination apparatus according to Claim 15, wherein:
the objective-lens advancing-and-retracting mechanism includes a dovetail groove provided parallel to the optical axis direction on one of the apparatus main body and the objective lens, and a dovetail tenon, provided in the other one of the apparatus main body and the objective lens, for engaging with the dovetail groove in such a manner as to allow movement along the dovetail groove; and
the attaching-and-detaching mechanism comprises a notch formed in the dovetail groove for disengaging from the dovetail tenon at the retracted position of the objective lens.

19. A microscope examination apparatus according to Claim 15, wherein the attaching-and-detaching mechanism includes
a dovetail groove provided parallel to a direction intersecting the optical axis direction on one of the apparatus main body and the objective lens, and
a dovetail tenon, provided on the other one of the apparatus main body and the objective lens, for engaging with the dovetail groove in such a manner as to allow movement along the dovetail groove.
